# EUROPÄISCHE PATENTSCHRIFT

(11) **EP 3 681 755 B1**
(45) Veröffentlichungstag und Bekanntmachung des Hinweises auf die Patenterteilung: **06.09.2023**
(21) Anmeldenummer: 18768867.6
(22) Anmeldetag: 10.09.2018
(51) Int. Cl.: B60L 53/14, B60L 53/16, B60L 53/35, B60L 53/36, B60L 53/18, B60L 53/30

(54) **FAHRZEUGVERBINDUNGSVORRICHTUNG, BODENKONTAKTEINHEIT, FAHRZEUGKOPPELSYSTEM SOWIE VERFAHREN ZUR AUTOMATISCHEN, KONDUKTIVEN VERBINDUNG EINER FAHRZEUGKONTAKTEINHEIT MIT EINER BODENKONTAKTEINHEIT**
VEHICLE CONNECTION DEVICE, GROUND CONTACT UNIT, VEHICLE COUPLING SYSTEM AND METHOD FOR AUTOMATIC CONDUCTIVE CONNECTION OF A VEHICLE CONTACT UNIT WITH A GROUND CONTACT UNIT
DISPOSITIF DE CONNEXION DE VEHICULE, UNITE DE CONTACT DE PLANCHER, SYSTEME D'ATTELAGE DE VEHICULE ET PROCEDE DE CONNEXION CONDUCTIVE AUTOMATIQUE D'UNE UNITE DE CONTACT DE VEHICULE A UNE UNITE DE CONTACT DE PLANCHER

(30) Priorität: 12.09.2017 DE 102017121105
(43) Veröffentlichungstag der Anmeldung: 22.07.2020
(73) Patentinhaber: Easelink GmbH, 8010 Graz (AT)
(72) Erfinder: LEIBETSEDER, Manuel, 8010 Graz (AT); STOCKINGER, Hermann, 8010 Graz (AT); LAUBLAETTNER, Manuel, 8010 Graz (AT)
(74) Vertreter: Prinz & Partner mbB
(86) Internationale Anmeldenummer: PCT/EP2018/074341
(87) Internationale Veröffentlichungsnummer: WO 2019/052962

(56) Entgegenhaltungen:
- EP-A1- 2 625 947
- EP-B1- 2 069 162
- WO-A1-2017/054858
- DE-A1-102013 110 548
- DE-U1-202010 015 377
- DE-U1-202010 015 377
- KR-A- 20100 050 653
- US-A1- 2015 336 677
- US-A1- 2016 207 409
- US-B1- 8 890 475
- US-B1- 9 742 112
- US-B2- 8 373 389

## Beschreibung

Die Erfindung betrifft eine Fahrzeugverbindungsvorrichtung für ein Fahrzeugbatterieladesystem, eine Bodenkontakteinheit für ein Fahrzeugbatterieladesystem, ein automatisches Fahrzeugkoppelsystem sowie ein Verfahren zur automatischen, konduktiven Verbindung einer Fahrzeugkontakteinheit mit einer Bodenkontakteinheit.

Bei elektrisch angetriebenen Fahrzeugen, wie Plug-in-Hybridfahrzeugen und reinen Elektrofahrzeugen, müssen die Batterien der Fahrzeuge regelmäßig, am besten nach jeder Fahrt, aufgeladen werden. Hierzu wird das Fahrzeug mittels eines Fahrzeugkoppelsystems mit einer Stromquelle, beispielsweise dem örtlichen Stromnetz, verbunden. Hierzu kann ein Stecker, wie der Typ-2 Stecker verwendet werden, der von einer Person manuell in die entsprechende Buchse des Fahrzeugs eingesteckt werden muss.

Bekannt sind beispielsweise Fahrzeugkoppelsysteme für Fahrzeugbatterieladesysteme mit einer Kontakteinheit des Stromanschlusses, die am Boden vorgesehen ist. Diese am Boden angeordnete Bodenkontakteinheit wird mittels einer verfahrbaren Fahrzeugkontakteinheit, die sich aus dem Unterboden des Fahrzeugs nach unten bewegen kann, physisch kontaktiert. Auf diese Weise wird eine elektrische Verbindung des Fahrzeugs mit dem örtlichen Stromnetz ermöglicht.

Hierbei ist es notwendig, dass die an der Fahrzeugkontakteinheit vorgesehenen Elektroden mit Kontaktflächen der Bodenkontakteinheit physisch in Berührung kommen. Dazu muss die Fahrzeugkontakteinheit nicht nur oberhalb der Bodenkontakteinheit beim Abstellen des Fahrzeugs positioniert werden, sondern es müssen auch die richtigen Elektroden der Fahrzeugkontakteinheit auf den entsprechenden Kontaktflächen der Bodenkontakteinheit sitzen, da die Elektroden bzw. Kontaktflächen unterschiedliche Funktionen haben.

Im Rahmen dieser Erfindung werden unter Elektroden elektrische Kontakte verstanden, die zur Ausbildung einer elektrischen Verbindung mit entsprechenden Kontaktfläche vorgesehen sind.

Außerdem sind mit "Erdung" der Schutzleiter, mit "Phase" der Außenleiter und mit "Neutralkontakt" oder ähnlichem der Neutralleiter einer elektrischen Anordnung gemeint.

Aus der EP 2 069 162 B1 ist ein elektrisch angetriebenes Fahrzeug mit einer Fahrzeugkontakteinheit bekannt, die mit einer Bodenkontakteinheit in Kontakt gebracht wird, um eine Batterie des Fahrzeugs konduktiv zu laden. Die Bodenkontakteinheit hat eine Vielzahl von elektrischen Kontaktfeldern, die in Form einer Matrix angeordnet sind. Die Kontaktfelder sind über elektrische Leitungen mit einer Steuereinheit verbunden und können von der Steuereinheit jeweils auf ein hohes elektrisches Potential oder auf Erdpotential gelegt werden. Die Fahrzeugkontakteinheit hat hierbei einen ersten ringförmigen Kranz mit elektrischen Kontakten und einen zweiten ringförmigen Kranz mit elektrischen Kontakten, der innerhalb des ersten Kranzes angeordnet ist. Der erste und der zweite Kranz haben dabei einen Abstand voneinander, der größer ist als der Durchmesser der elektrischen Kontaktfelder, um einen Kurzschluss auszuschließen. Die Fahrzeugkontakteinheit ist ferner mittels Aktuatoren absenkbar.

In der US 8 890 475 B1, der DE 20 2010 015 377 U1 sowie der US 2016/0207409 A1 sind Fahrzeugverbindungsvorrichtungen zum konduktiven Laden von Batterien in Fahrzeugen gezeigt.

Ferner zeigt die KR 2010 0050653 A eine Ladestation zum Laden eines ferngesteuerten Helikopters.

Aus der US 2015/0336677 A1 ist eine Verbindungsvorrichtung bekannt, mittels der Batterien eines elektrisch angetriebenen Flugzeugs während des Flugs geladen werden können.

Des Weiteren ist aus der EP 2 625 947 A1 ein elektrischer Rasenmäher mit einer Ladestation bekannt.

Es ist daher Aufgabe der Erfindung, eine Fahrzeugverbindungsvorrichtung, eine Bodenkontakteinheit, ein automatisches Fahrzeugkoppelsystem sowie ein Verfahren zur automatischen, konduktiven Verbindung einer Fahrzeugkontakteinheit mit einer Bodenkontakteinheit bereitzustellen, die eine physische elektrische Verbindung zwischen einer Fahrzeugkontakteinheit und einer Bodenkontakteinheit auf automatische Weise und unter Ausschluss von Fehlkontaktierungen ermöglichen.

Die Aufgabe wird gelöst durch eine Fahrzeugverbindungsvorrichtung für ein Fahrzeugbatterieladesystem zur automatischen, konduktiven Verbindung einer Fahrzeugkontakteinheit mit einer Bodenkontakteinheit.

Die Fahrzeugverbindungsvorrichtung umfasst die Fahrzeugkontakteinheit, die einen Sockel mit einem Kontaktierungsbereich aufweist, in dem wenigstens eine erste Kontaktelektrode, wenigstens eine zweite Kontaktelektrode und wenigstens eine dritte Kontaktelektrode vorgesehen sind, wobei die Fahrzeugkontakteinheit in eine Kontaktierungsrichtung zur Bodenkontakteinheit hin bewegbar ist, um die wenigstens eine erste Kontaktelektrode, die wenigstens eine zweite Kontaktelektrode und die wenigstens eine dritte Kontaktelektrode mit der Bodenkontakteinheit in Berührung zu bringen. Die Fahrzeugkontakteinheit hat zudem einen Ausrichtungsaktuator, der derart mit dem Sockel verbunden ist, dass er den Sockel um eine Drehachse verdrehen kann, die im Wesentlichen in die Kontaktierungsrichtung verläuft.

Dadurch, dass der Sockel und damit die Kontaktelektroden der Fahrzeugkontakteinheit drehbar sind, ist es nicht notwendig, das Fahrzeug mit besonders hoher Präzision über der Bodenkontakteinheit zu positionieren. Falls nach dem Absenken die Kontaktelektroden der Fahrzeugkontakteinheit nicht mit den ihnen entsprechenden Kontaktflächen der Bodenkontakteinheit in Berührung sind, kann diese Fehlstellung durch Rotation des Sockels und damit der fahrzeugseitigen Kontaktelektroden behoben werden. Der Sockel und die fahrzeugseitigen Kontaktelektroden werden dabei in oder gegen den Uhrzeigersinn so lange verdreht, bis alle Kontaktelektroden der Fahrzeugkontakteinheit mit den entsprechenden Kontaktflächen der Bodenkontakteinheit in physischem Kontakt sind. Dies erleichtert die Positionierung des Fahrzeugs und verhindert zudem Fehlkontaktierungen zuverlässig.

Die Drehachse kann senkrecht zur Oberfläche des Sockels mit dem Kontaktierungsbereich sein. Der maximale Drehwinkel des Sockels liegt z. B. bei mindestens 120°. Bei vorgesehener Verwendung ist der Kontaktierungsbereich der Fahrzeugkontakteinheit zu der Bodenkontakteinheit gewandt.

Die Fahrzeugverbindungsvorrichtung ist dazu eingerichtet, ohne manuelles Zutun einer Person die Fahrzeugkontakteinheit mit einer Bodenkontakteinheit in korrekter Weise in physischen Kontakt zu bringen, d.h. sie kann Teil eines automatischen, konduktiven Fahrzeugbatterieladesystems sein. Hierzu wird eine konduktive, d.h. galvanische Verbindung durch direkten physischen Kontakt der Kontaktelektroden und der Kontaktflächen erzeugt. Dies steht im Gegensatz zu induktiven Ladesystemen, bei denen ein direkter Kontakt fehlt.

Beispielsweise ist die wenigstens eine erste Kontaktelektrode wenigstens eine Schutzkontaktelektrode, die wenigstens eine zweite Kontaktelektrode ist wenigstens eine Neutralelektrode oder wenigstens eine positive Gleichstromkontaktelektrode und/oder die wenigstens eine dritte Kontaktelektrode ist wenigstens eine Phasenelektrode oder wenigstens eine negative Gleichstromkontaktelektrode. Auf diese Weise ist die Fahrzeugverbindungsvorrichtung zur Verwendung mit Wechselstrom bzw. Gleichstrom geeignet.

Zum Beispiel ist die Schutzkontaktelektrode mit einem Schutzleiter eines Bordnetzes des Fahrzeugs verbunden, die Phasenelektrode ist mit der Phase bzw. einem Außenleiter des Bordnetzes des Fahrzeugs verbunden und die Neutralelektrode ist mit einem Neutralleiter des Bordnetzes des Fahrzeugs verbunden. Insbesondere ist die Funktion der Phasenelektrode und der Neutralelektrode nicht durch eine Steuereinheit vertauschbar.

Im Kontaktierungsbereich können drei zweite Kontaktelektroden, drei dritte Kontaktelektroden und drei, sechs oder sieben erste Kontaktelektroden vorgesehen sein.

Vorzugsweise sind die wenigstens eine erste Kontaktelektrode, die wenigstens eine zweite Kontaktelektrode und die wenigstens eine dritte Kontaktelektrode zusammen an der Kontaktseite des Sockels auf den Gitterpunkten eines Sockelgitters in Form eines zweidimensionalen Bravais-Gitters angeordnet. Das Sockelgitter kann ein hexagonales Gitter sein. Auf diese Weise ist eine bestimmte und wiederholbare Anordnung der Kontaktelektroden am Sockel möglich, wodurch eine Kontaktierung mit der Bodenkontakteinheit vereinfacht wird.

Die Kontaktseite des Sockels ist die Seite des Sockels, die bei vorgesehener Verwendung der Bodenkontakteinheit zugewandt ist.

In einer Ausgestaltung der Erfindung ist im Kontaktierungsbereich, insbesondere am Mittelpunkt des Kontaktierungsbereiches ein Magnetbereich vorgesehen, in dem im oder am Sockel ein Kontaktmagnet, insbesondere vertikal beweglich, angeordnet ist, wobei der Kontaktmagnet die Position der Drehachse bestimmt. Somit wird eine einfache und mit Sicherheit bestimmte Drehachse definiert. Die Drehachse verläuft dabei vorzugsweise durch den Mittelpunkt des Magneten. Der Magnetbereich kann, muss jedoch keine Kontaktelektrode aufweisen. Der Kontaktmagnet ist zum Beispiel schaltbar.

Denkbar ist auch die Verwendung von mehreren Magnetbereichen am Sockel, die die Position des Sockels bzw. der Drehachse auf der Bodenkontakteinheit an mehreren Stellen des Kontaktierungsbereiches definieren.

Vorzugsweise ist eine der wenigstens einen ersten Kontaktelektrode, der wenigstens einen zweiten Kontaktelektrode und der wenigstens einen dritten Kontaktelektrode, insbesondere eine erste Kontaktelektrode im Magnetbereich angeordnet. Der Kontaktmagnet ist der im Magnetbereich angeordneten Kontaktelektrode zugeordnet, wodurch durch den Magnetbereich kein Platz verschwendet wird.

In einer Ausführungsvariante liegt der Magnetbereich auf einem Gitterpunkt des Sockelgitters, wobei auf den konzentrisch dazu angeordneten, nächst benachbarten Gitterpunkten Kontaktelektroden vorgesehen sind, insbesondere abwechselnd zweite Kontaktelektroden und dritte Kontaktelektroden. Dabei sind die nächstbenachbarten Gitterpunkte die nächsten Nachbarn, also diejenigen Gitterpunkte mit dem geringsten Abstand zum Gitterpunkt, auf dem der Magnetbereich liegt. Somit lässt sich eine Fehlkontaktierung zwischen den Kontaktelektroden und den entsprechenden Kontaktflächen auf der Bodenkontakteinheit alleine durch Drehung um den Magnetbereich beheben.

Auf den übernächst zum Magnetbereich benachbarten Gitterpunkten können Kontaktelektroden vorgesehen sein, insbesondere erste Kontaktelektroden, wodurch die Anzahl der nutzbaren Gitterpunkte vergrößert werden kann.

Denkbar ist auch, dass auf den drittnächsten Gitterpunkten wieder Kontaktelektroden vorgesehen sind, insbesondere abwechselnd zweite Kontaktelektroden und dritte Kontaktelektroden. Dabei grenzen jedoch keine gleichen Kontaktelektroden aneinander an. Vielmehr können Untergitter der ersten, zweiten und dritten Kontaktelektroden gebildet werden, ähnlich wie die Untergitter der Bodenkontakteinheit.

Um mittels der Fahrzeugverbindungsvorrichtung das Fahrzeug mit einer dreiphasigen Drehstromquelle verbinden zu können, sind zur Übertragung von Drehstrom wenigstens drei zweite Kontaktelektroden und/oder wenigstens drei dritte Kontaktelektroden vorgesehen, wobei wenigstens eine der wenigstens drei zweiten und/oder dritten Kontaktelektroden eine L1-Phasenelektrode, wenigstens eine andere der wenigstens drei zweiten und/oder dritten Kontaktelektroden eine L2-Phasenelektrode und wenigstens eine weitere der wenigstens drei zweiten und/oder dritten Kontaktelektroden eine L3-Phasenelektrode ist. Die L1-Phasenelektroden, die L2-Phasenelektroden und die L3-Phasenelektroden sind zum Beispiel mit jeweils einem der Außenleiter des Bordnetzes des Fahrzeugs verbunden.

Denkbar ist auch, dass das Fahrzeug nur eine der Phasen des Drehstroms verwenden kann, der von den Bodenkontakteinheit zur Verfügung gestellt wird, da das Fahrzeug zum Beispiel für einphasigen Wechselstrom ausgelegt ist. In diesem Fall ist nur die L1-Phasenelektrode, die L2-Phasenelektrode oder die L3-Phasenelektrode mit dem Bordnetz des Fahrzeugs verbunden.

Die übrigen Phasenelektroden können dann fahrzeugseitig unverbunden sein.

In einer Ausführungsform der Erfindung weist die Fahrzeugverbindungsvorrichtung zur Kontaktierungs- und Zuordnungsüberprüfung von geschlossenen Kontaktstellen eine Signalquelle für ein Hochfrequenzsignal und/oder eine Messeinheit für ein Hochfrequenzsignal auf, die mit der wenigstens einen ersten Kontaktelektrode, der wenigstens einen zweiten Kontaktelektrode und/oder der wenigstens einen dritten Kontaktelektrode elektrisch verbunden ist. Mittels der Signalquelle lässt sich ein Hochfrequenzsignal über die Kontaktstelle senden, wodurch auch während eines Ladevorgangs überprüft werden kann, ob die Kontaktstellen einwandfrei funktionieren. Diese Überprüfung ist durch die Verwendung von Hochfrequenzsignalen unabhängig vom verwendeten Ladestrom und kann daher auch während des Ladevorgangs erfolgen, insbesondere über die gleichen Kontaktelektroden und Kontaktbereiche, die auch zu Übertragung des Ladestroms verwendet werden.

Unter einem Hochfrequenzsignal wird im Rahmen dieser Erfindung ein Signal mit einer Frequenz gleich oder größer als 10 Hz, insbesondere gleich oder größer als 1 kHz, insbesondere gleich oder größer als 200 kHz verstanden.

Zur effizienten und besonders präzisen Drehung des Sockels umfasst der Ausrichtungsaktuator einen Elektromotor, dessen Ausgangswelle mit der Fahrzeugkontakteinheit zur Drehmomentübertragung verbunden ist.

Denkbar ist auch, dass die Fahrzeugverbindungsvorrichtung einen Kontaktierungsaktuator mit einem fahrzeugseitigen Ende und einem Sockelende aufweist, wobei die Fahrzeugkontakteinheit mit dem Sockelende verbunden ist und der Kontaktierungsaktuator derart eingerichtet ist, dass er die Fahrzeugkontakteinheit in Kontaktierungsrichtung bewegen kann. Der Kontaktierungsaktuator kann eine Kolben-Zylindereinheit oder einen Faltenbalg umfassen, wobei der Faltenbalg beispielsweise pneumatisch betrieben wird.

Beispielsweise ist der Sockel bzw. die Fahrzeugkontakteinheit über den Kontaktierungsaktuator mit dem Ausrichtungsaktuator verbunden. Denkbar ist jedoch auch, dass die Fahrzeugkontakteinheit bzw. der Sockel über den Ausrichtungsaktuator mit dem Kontaktierungsaktuator verbunden ist.

Ferner wird die Aufgabe gelöst durch eine Bodenkontakteinheit für ein Fahrzeugbatterieladesystem zur automatische, konduktiven Verbindung der Bodenkontakteinheit und einer Fahrzeugkontakteinheit, mit einem plattenförmigen Grundkörper sowie ersten Kontaktbereichen, zweiten Kontaktbereichen und dritten Kontaktbereichen, die auf einer Zielfläche des Grundkörpers in einem Hauptgitter in Form eines zweidimensionalen Bravais-Gitters angeordnet sind.

Die ersten Kontaktbereiche sind in einem ersten Untergitter in Form eines zweidimensionalen Bravais-Gitters, die zweiten Kontaktbereiche in einem zweiten Untergitter in Form eines zweidimensionalen Bravais-Gitters und die dritten Kontaktbereiche in einem dritten Untergitter in Form eines zweidimensionalen Bravais-Gitters angeordnet, wobei das erste Untergitter, das zweite Untergitter und das dritte Untergitter ineinander verschachtelt sind. In Richtung zumindest einer der Basisvektoren des Hauptgitters treten die ersten Kontaktbereiche, die zweiten Kontaktbereiche und die dritten Kontaktbereiche im Wechsel auf.

Durch die Anordnung der Kontaktbereiche in einem Gitter ist eine genaue Positionierung des Kontaktierungsbereiches der Fahrzeugkontakteinheit auf der Zielfläche der Bodenkontakteinheit nicht mehr notwendig, solange der Kontaktierungsbereich innerhalb des Hauptgitters liegt. Unter Ausnutzung der Symmetrie des Hauptgitters und aufgrund der verschachtelten Anordnung der Untergitter kann eine korrekte Zuordnung der Kontaktelektroden der Fahrzeugkontakteinheit mit den entsprechenden Kontaktbereichen bzw. Kontaktflächen der Bodenkontakteinheit durch Drehung der Fahrzeugkontakteinheit erreicht werden.

Die Gitterpunkte sind beispielsweise die Schwerpunkte der Kontaktbereiche. Ein Kontaktbereich ist ein zusammenhängender Bereich, in den insbesondere kein anderer Bereich hineinragt. In den Kontaktbereichen kann jeweils eine, insbesondere sechseckige oder kreisrunde leitende Kontaktfläche vorgesehen sein, die die Kontaktfläche für die Fahrzeugkontakteinheit darstellen. Das Sechseck kann ein regelmäßiges Sechseck sein.

Denkbar ist auch, dass mehrere Kontaktflächen in einem Kontaktbereich vorgesehen sind.

Das Sockelgitter entspricht im Wesentlichen dem Hauptgitter der Bodenkontakteinheit.

Beispielsweise weist die Bodenkontakteinheit eine Bodensteuereinheit sowie einen ersten Bodenanschluss, einen zweiten Bodenanschluss und einen dritten Bodenanschluss zum bodenseitigen Anschließen der Bodenkontakteinheit auf. Die ersten Kontaktbereiche sind mit dem ersten Bodenanschluss elektrisch verbunden, und die Bodensteuereinheit ist dazu eingerichtet, die zweiten Kontaktbereiche zwischen wenigstens zwei des ersten Bodenanschlusses, des zweiten Bodenanschlusses und einer Erdung zur elektrischen Verbindung zu schalten und/oder die dritten Kontaktbereiche zwischen wenigstens zwei des ersten Bodenanschlusses, des dritten Bodenanschlusses und einer Erdung zur elektrischen Verbindung zu schalten. Auf diese Weise wird ein sicherer Betriebsmodus ermöglicht, wenn die Bodenkontakteinheit nicht mit einer Fahrzeugkontakteinheit in Verbindung steht.

In einer Ausgestaltung der Erfindung sind die ersten Kontaktbereiche Schutzkontaktbereiche, die zweiten Kontaktbereiche sind Neutralkontaktbereiche oder positive Gleichstromkontaktbereiche und/oder die dritten Kontaktbereiche sind Phasenkontaktbereiche oder negative Gleichstromkontaktbereiche. Auf diese Weise können die Herstellungskosten der Bodenkontakteinheit reduziert werden.

Zum Beispiel sind die Schutzkontaktbereiche mit dem Schutzleiter eines örtlichen Stromnetzes elektrisch verbunden, der Neutralkontaktbereich ist mit einem Neutralleiter des örtlichen Stromnetzes elektrisch verbunden und der Phasenkontaktbereich ist mit der Phase bzw. einem Außenleiter des örtlichen Stromnetzes elektrisch verbunden.

Dabei kann die Bodenkontakteinheit eine Bodensteuereinheit aufweisen, die derart eingerichtet ist, dass sie die Neutralkontaktbereiche und/oder die Phasenkontaktbereiche erden und/oder auf das gleiche Potenzial wie die Schutzkontaktbereiche legen kann. Hierzu kann die Bodensteuereinheit die Neutralkontaktbereiche und/oder die Phasenkontaktbereiche mit dem Schutzleiter des Stromanschlusses verbinden. Die Funktion der Phasenkontaktbereiche und der Neutralkontaktbereiche innerhalb des Stromkreises zur Stromübertragung kann zum Beispiel von der Bodensteuereinheit nicht verändert oder vertauscht werden.

Die Zielfläche mit den Kontaktbereichen ist beispielsweise auf der Oberseite der Bodenkontakteinheit vorgesehen.

Vorzugsweise sind wenigstens zwei der drei Untergitter identische Gitter und/oder wenigstens zwei von dem Hauptgitter und den drei Untergittern sind vom gleichen Typ, insbesondere sind das Hauptgitter, das erste Untergitter, das zweite Untergitter und/oder das dritte Untergitter hexagonale Gitter. Unter identischen Gittern wird dabei verstanden, dass sie die gleichen Basisvektoren haben, aber unterschiedliche Positionen auf der Zielfläche der Bodenkontakteinheit. Zum Beispiel haben die Basisvektoren des Hauptgitters ein Drittel der Länge des entsprechenden Basisvektors eines der Untergitters. Unter einem hexagonalen Gitter wird dabei der zweidimensionale Bravais-Gittertyp des hexagonalen Gitters verstanden, bei dem die beiden Basisvektoren den gleichen Betrag haben und einen Winkel von 120° miteinander einschließen.

Auf diese Weise ist ein besonders hoher Grad der Symmetrie der verschiedenen Gitter möglich, wodurch die korrekte Positionierung der Fahrzeugkontakteinheit auf der Bodenkontakteinheit weiter vereinfacht wird.

Um dreiphasigen Drehstrom zum Laden der Batterie des Fahrzeugs verwenden zu können, sind zur Übertragung eines dreiphasigen Drehstroms wenigstens drei zweite Kontaktbereiche und/oder wenigstens drei dritte Kontaktbereiche vorgesehen, wobei wenigstens einer der wenigstens drei zweiten und/oder dritten Kontaktbereiche ein L1-Kontaktbereich, wenigstens ein anderer der wenigstens drei zweiten und/oder dritten Kontaktbereiche ein L2-Kontaktbereich und wenigstens ein weiterer der wenigstens drei zweiten und/oder dritten Kontaktbereiche ein L3-Kontaktbereich ist. Der wenigstens eine L1-Kontaktbereich, der wenigstens eine L2-Kontaktbereich und der wenigstens eine L3-Kontaktbereich treten in Richtung zumindest einer der Basisvektoren des dritten Untergitters im Wechsel auf. Dabei sind der L1-Kontaktbereich, der L2-Kontaktbereich und der L3-Kontaktbereich mit je einem der Außenleiter des in diesem Falle dreiphasigen örtlichen Stromnetzes elektrisch verbunden.

Für den Fall, dass das Fahrzeug nur eine Phase des Drehstroms verwenden kann, der von den Bodenkontakteinheit zur Verfügung gestellt wird, wird nur der L1 -Kontaktbereich, der L2-Kontaktbereich oder der L3-Kontaktbereich zum Laden des Fahrzeugs verwendet. Die übrigen Kontaktbereiche können potentialfrei geschaltet werden, zum Beispiel indem sie mit dem Schutzleiter elektrisch verbunden werden.

In den ersten Kontaktbereichen, den zweiten Kontaktbereichen und/oder den dritten Kontaktbereichen sind im oder am Grundkörper magnetische, insbesondere ferromagnetische Elemente vorgesehen, um eine definierte Positionierung der Fahrzeugkontakteinheit in Bezug zum Hauptgitter zu ermöglichen.

Die magnetischen Elemente können jeweils eine elektrische Leitung umgeben, die den entsprechenden Kontaktbereich elektrisch kontaktiert. Die magnetischen Elemente können aus Stahl sein. Zum Beispiel sind die magnetischen Elemente Stahlzylinder, durch die die jeweilige elektrische Leitung geführt ist. Auf diese Weise kann das magnetische Element platzsparend ausgeführt sein.

Denkbar ist auch, dass die magnetischen Elemente aus einem Material sind, dass sowohl magnetisch ist, als auch den Leitungswellenwiderstand der elektrischen Leitung gegenüber Hochfrequenzsignalen erhöht.

In einer Ausgestaltung weist die Bodenkontakteinheit eine Signalquelle für ein Hochfrequenzsignal und/oder eine Messeinheit für ein Hochfrequenzsignal auf, die mit den ersten Kontaktbereichen, den zweiten Kontaktbereichen und/oder den dritten Kontaktbereichen elektrisch verbunden ist, um eine korrekte Kontaktierung über die Kontaktstelle hinweg zu detektieren.

Die Aufgabe wird ferner gelöst durch ein automatisches Fahrzeugkoppelsystem mit einer Fahrzeugverbindungsvorrichtung gemäß der Erfindung und einer Bodenkontakteinheit gemäß der Erfindung.

Um stets zuverlässig kontaktieren zu können, kann der maximale Drehwinkel, um den der Ausrichtungsaktuator die Fahrzeugkontakteinheit verdrehen kann, wenigstens so groß wie der größte Winkel zwischen den primitiven Basisvektoren des Hauptgitters sein.

Für optimale Ergebnisse entsprechen das Sockelgitter und das Hauptgitter sich einander im Wesentlichen und/oder der Ausrichtungsaktuator ist derart mit dem Sockel verbunden, dass er den Sockel entlang der Bodenkontakteinheit, insbesondere bei bestehendem Kontakt zwischen den Kontaktelektroden und den Kontaktflächen verdrehen kann.

In einer Ausgestaltung der Erfindung wirken die magnetischen Elemente der Fahrzeugkontakteinheit mit den Kontaktmagneten zusammen, um die Fahrzeugkontakteinheit an der Bodenkontakteinheit zu fixieren und um die Drehachse auszubilden. Auf diese Weise ist die Lage der Drehachse relativ zum Hauptgitter stets bekannt.

Zudem wird die Aufgabe gelöst durch ein Verfahren zur automatischen, konduktiven Verbindung einer Fahrzeugkontakteinheit mit einer Bodenkontakteinheit mit den folgenden Schritten:
a) Absenken der Fahrzeugkontakteinheit in eine Kontaktierungsrichtung zur Bodenkontakteinheit hin bis zur Berührung der Fahrzeugkontakteinheit und der Bodenkontakteinheit,
b) Überprüfen, ob wenigstens eine bestimmte Kontaktelektrode der Fahrzeugkontakteinheit wenigstens einen entsprechenden bestimmten Kontaktbereich der Bodenkontakteinheit kontaktiert, und
c) Verdrehen der Fahrzeugkontakteinheit um eine Drehachse, falls kein oder kein ausreichender elektrischer Kontakt zwischen der wenigstens einen bestimmten fahrzeugseitigen Kontaktelektrode und dem wenigstens einen entsprechenden bestimmten Kontaktbereich besteht.

Die bestimmte Kontaktelektrode und der bestimmte Kontaktbereich sind dabei jeweils vom gleichen Typ, d. h. zum Beispiel eine erste Kontaktelektrode und ein erster Kontaktbereich, eine Schutzkontaktelektrode und ein Schutzkontaktbereich, eine zweite Kontaktelektrode und ein zweiter Kontaktbereich, eine Neutralelektrode und ein Neutralkontaktbereich, eine dritte Kontaktelektrode und ein dritter Kontaktbereich oder eine Phasenelektrode und ein Phasenkontaktbereich. Die Überprüfung, ob die entsprechenden Kontaktbereiche bzw. Kontaktelektroden miteinander kontaktiert sind, kann mittels Hochfrequenzsignalen erfolgen, die über die Kontaktstellen übertragen werden.

Vorzugsweise wird während dem Verdrehen oder nach abgeschlossener Drehung überprüft, ob die wenigstens eine bestimmte Kontaktelektrode den wenigstens einen entsprechenden Kontaktbereich kontaktiert, wodurch schnell eine Rückmeldung über den Erfolg der Verdrehung stattfinden kann. Zum Beispiel wird bei einem Misserfolg die Drehrichtung verändert.

Beispielsweise ist die wenigstens eine bestimmte Kontaktelektrode eine oder mehrere der wenigstens einen ersten Kontaktelektrode und der wenigstens eine bestimmte Kontaktbereich ist ein oder mehrere des wenigstens einen ersten Kontaktbereiches, damit stets gewährleistet ist, dass die zum Laden hergestellte Verbindung einen funktionierenden Schutzleiter hat.

Insbesondere sind die außen gelegenen ersten Kontaktelektroden oder Schutzkontaktelektroden, d. h. nicht diejenige im Magnetbereich liegenden Schutzkontaktelektroden die bestimmten Kontaktelektroden.

Alternativ oder zusätzlich wird die Aufgabe gelöst durch eine Fahrzeugkontakteinheit für ein Fahrzeugbatterieladesystem zur automatischen, konduktiven Verbindung einer Bodenkontakteinheit und der Fahrzeugkontakteinheit, mit mehreren ersten Kontaktelektroden, die miteinander über eine elektrische Leitung elektrisch verbunden sind und die zumindest einen ersten Fahrzeug-Teilstromkreis bilden, und wenigstens eine zweite Kontaktelektrode. Die Fahrzeugkontakteinheit weist zudem eine Messeinheit und/oder eine Signalquelle für Hochfrequenzsignale auf.

Mittels der Messeinheit der Signalquelle für Hochfrequenzsignale kann über die Kontaktstellen, d. h. der Verbindung einer der Kontaktelektroden der Fahrzeugkontakteinheit mit den entsprechenden Kontaktbereichen der Bodenkontakteinheit, ein Hochfrequenzsignal übermittelt werden. Durch die Messeinheit kann die entstehende Hochfrequenzantwort gemessen werden, um die Kontaktierung und deren Zuordnung zu überprüfen. Diese Überprüfung ist durch die Verwendung von Hochfrequenzsignalen unabhängig vom verwendeten Ladestrom und kann daher auch während des Ladevorgangs erfolgen, insbesondere über die gleichen Kontaktelektroden und Kontaktbereiche, die auch zu Übertragung des Ladestroms verwendet werden.

Von der Formulierung, wonach mehrere Kontaktelektroden einen Boden-Teilstromkreis bilden, sollen auch solche Teilstromkreise umfasst sein, die sich erst durch die Kontaktierung der Kontaktflächen mit den Kontaktelektroden der Fahrzeugkontakteinheit bilden. Dabei können auch die ersten und zweiten Kontaktelektroden miteinander elektrisch verbunden sein.

Die Fahrzeugkontakteinheit ist dazu eingerichtet, ohne manuelles Zutun einer Person mit einer Bodenkontakteinheit in korrekter Weise in physischen Kontakt gebracht zu werden, d.h. sie kann Teil eines automatischen, konduktiven Fahrzeugbatterieladesystems sein. Hierzu wird eine konduktive, d.h. galvanische Verbindung durch direkten Kontakt der Kontaktelektroden und der Kontaktflächen erzeugt. Dies steht im Gegensatz zu induktiven Ladesystemen, bei denen ein direkter Kontakt fehlt.

Dabei kann die Signalquelle und/oder die Messeinheit mit dem ersten Fahrzeug-Teilstromkreis verbunden sein. Außerdem können die Signalquelle und/oder die Messeinheit auch zur Übertragung von Daten zwischen dem Fahrzeug und der Bodenkontakteinheit verwendet werden. Selbstverständlich kann die elektrische Leitung wenigstens einen ohmschen Widerstand, wenigstens eine Kapazität, wie einen Kondensator und/oder wenigstens eine Induktivität, wie eine Spule, sowie eine beliebige Kombination dieser Bauteile aufweisen, um beispielsweise Signale in Teilstromkreise einzukoppeln und/oder Signale aus Teilstromkreisen wieder auszukoppeln.

Beispielsweise sind die ersten Kontaktelektroden und die zweiten Kontaktelektroden in einem Muster, insbesondere einem Sockelgitter in Form eines zweidimensionalen Bravais-Gitters angeordnet. Auf diese Weise ist eine bestimmte und wiederholbare Anordnung der Kontaktelektroden am Sockel möglich, wodurch eine Kontaktierung mit der Bodenkontakteinheit vereinfacht wird. Das Muster erstreckt sich über die gesamte Kontaktierungsfläche.

In einer Ausführungsvariante sind mehrere zweite Kontaktelektroden vorgesehen, die miteinander elektrisch verbunden sind und die einen zweiten Fahrzeug-Teilstromkreis bilden, und/oder die Fahrzeugkontakteinheit weist mehrere dritte Kontaktelektroden auf, insbesondere wobei die dritten Kontaktelektroden miteinander elektrisch verbunden sind und einen dritten Fahrzeug-Teilstromkreis bilden. Auf diese Weise lassen sich zwei bzw. drei verschiedene Arten von Kontaktelektroden bzw. Kontaktstellen auf Kontaktierung bzw. korrekte Zuordnung hin überprüfen.

Vorzugsweise ist der Leitungswellenwiderstand des ersten Fahrzeug-Teilstromkreises anders, insbesondere größer als der Leitungswellenwiderstand des zweiten Fahrzeug-Teilstromkreises und/oder des dritten Fahrzeug-Teilstromkreises. Dadurch werden Hochfrequenzsignale im ersten Fahrzeug-Teilstromkreis anders, insbesondere stärker gedämpft. Auf diese Weise lässt sich ermitteln, ob der erste Fahrzeug-Teilstromkreis in dem mit dem Hochfrequenzsignal beaufschlagten Stromkreis ist.

Zur Arretierung der Fahrzeugkontakteinheit an der Bodenkontakteinheit kann wenigstens ein Kontaktmagnet vorgesehen sein.

In einer Ausführungsform der Erfindung sind die ersten Kontaktelektroden Schutzkontaktelektroden und die zweiten Kontaktelektroden Neutralelektroden oder Phasenelektroden, um eine sichere Zuordnung der Schutzkontaktelektroden und damit des Schutzleiters zu ermöglichen.

Auch ist es denkbar, dass die ersten Kontaktelektroden mit dem Minuspol und die zweiten Kontaktelektroden mit dem Pluspol eines Gleichstromnetzes des Fahrzeugs bzw. der Batterie des Fahrzeugs verbunden sind oder umgekehrt.

Die zweiten Kontaktelektroden können ausschließlich Neutralelektroden oder ausschließlich Phasenelektroden sein. Falls dritte Kontaktelektroden vorhanden sind, sind dies entweder Phasenelektroden oder Neutralelektroden, sodass alle drei Kontaktelektrodenarten vorhanden sind. Auf diese Weise lässt sich eine elektrische Kontaktierung mit Schutzleitern zuverlässig herstellen. Die Funktion von Neutralelektroden und Phasenelektroden kann dabei insbesondere nicht vertauscht werden.

In einer Ausgestaltung der Erfindung sind die ersten Kontaktelektroden, die zweiten Kontaktelektroden und/oder die dritten Kontaktelektroden drehsymmetrisch um eine Symmetrieachse parallel zur Längserstreckung wenigstens einer der Kontaktelektroden angeordnet, wodurch die Kontaktelektroden auf einfache Weise automatisiert zu den richtigen Kontaktbereichen bewegt werden können.

Die Symmetrieachse verläuft zum Beispiel durch eine der Elektroden, durch den Magnetbereich und/oder durch den Mittelpunkt des Kontaktierungsbereiches. Dabei kann die gesamte Fahrzeugkontakteinheit drehsymmetrisch sein und z.B. keine asymmetrischen Führungen aufweisen.

Alternativ oder zusätzlich wird die Aufgabe gelöst durch eine Bodenkontakteinheit für ein Fahrzeugbatterieladesystem zur automatischen, konduktiven Verbindung der Bodenkontakteinheit und der Fahrzeugkontakteinheit, mit einer Zielfläche, die mehrere erste Kontaktbereiche mit jeweils wenigstens einer ersten Kontaktfläche und wenigstens einem zweiten Kontaktbereich mit jeweils wenigstens einer zweiten Kontaktfläche aufweist, wobei die ersten Kontaktflächen miteinander über eine elektrische Leitung elektrisch verbunden sind und zumindest einen ersten Boden-Teilstromkreis bilden. Die Bodenkontakteinheit weist eine Messeinheit und/oder eine Signalquelle für Hochfrequenzsignale auf.

Mittels der Messeinheit und der Signalquelle für Hochfrequenzsignale kann über die Kontaktstellen, d. h. der Verbindung einer der Kontaktelektroden der Fahrzeugkontakteinheit mit den entsprechenden Kontaktbereichen der Bodenkontakteinheit, ein Hochfrequenzsignal übermittelt werden. Durch die Messeinheit kann die entstehende Hochfrequenzantwort gemessen werden, um die Kontaktierung und deren Zuordnung zu überprüfen. Diese Überprüfung ist durch die Verwendung von Hochfrequenzsignalen unabhängig vom verwendeten Ladestrom und kann daher auch während des Ladevorgangs erfolgen, insbesondere über die gleichen Kontaktelektroden und Kontaktbereiche, die auch zu Übertragung des Ladestroms verwendet werden.

Zum Beispiel werden die Teilstromkreise auch erst durch die Kontaktierung der Kontaktflächen mit den Kontaktelektroden ausgebildet. Dabei können die ersten und zweiten Kontaktbereiche miteinander elektrisch verbunden sein.

Die Bodenkontakteinheit ist dazu eingerichtet, ohne manuelles Zutun einer Person mit einer Fahrzeugkontakteinheit in korrekter Weise in physischem Kontakt gebracht zu werden, d.h. sie kann Teil eines automatischen, konduktiven Fahrzeugbatterieladesystems sein.

Dabei kann die Signalquelle und/oder die Messeinheit mit dem ersten Boden-Teilstromkreis verbunden sein. Außerdem können die Signalquelle und/oder die Messeinheit auch zur Übertragung von Daten zwischen dem Fahrzeug und der Bodenkontakteinheit verwendet werden. Selbstverständlich kann die elektrische Leitung wenigstens einen ohmschen Widerstand, wenigstens eine Kapazität, wie einen Kondensator und/oder wenigstens eine Induktivität, wie eine Spule, sowie eine beliebige Kombination dieser Bauteile aufweisen.

Beispielsweise sind die ersten Kontaktbereiche und die zweiten Kontaktbereiche in einem Hauptmuster, insbesondere einem Hauptgitter in Form eines zweidimensionalen Bravais-Gitters angeordnet. Die ersten Kontaktbereiche sind in einem ersten Untermuster, insbesondere einem ersten Untergitter in Form eines zweidimensionalen Bravais-Gitters und die zweiten Kontaktbereiche sind in einem zweiten Untermuster, insbesondere einem Untermuster in Form eines zweidimensionalen Bravais-Gitters angeordnet, wobei das erste Untermuster und das zweite Untermuster ineinander verschachtelt sind.

Durch die Anordnung der Kontaktbereiche in einem Muster, insbesondere einem Gitter ist eine genaue Positionierung des Kontaktierungsbereiches der Fahrzeugkontakteinheit auf der Zielfläche der Bodenkontakteinheit nicht mehr notwendig, solange der Kontaktierungsbereich innerhalb des Hauptgitters liegt. Unter Ausnutzung der Symmetrie des Hauptgitters und aufgrund der verschachtelten Anordnung der Untergitter kann eine korrekte Zuordnung der Kontaktelektroden der Fahrzeugkontakteinheit mit den entsprechenden Kontaktbereichen bzw. Kontaktflächen der Bodenkontakteinheit durch Drehung der Fahrzeugkontakteinheit erreicht werden.

Das Hauptmuster bzw. die Untermuster erstrecken sich über die gesamte Zielfläche.

In einer Ausführungsvariante sind mehrere zweite Kontaktbereiche vorgesehen, wobei die zweiten Kontaktflächen miteinander elektrisch verbunden sind und einen zweiten Boden-Teilstromkreis bilden, und/oder die Bodenkontakteinheit weist mehrere dritte Kontaktbereiche auf, insbesondere wobei die dritten Kontaktbereiche miteinander elektrisch verbunden sind und einen dritten Boden-Teilstromkreis bilden. Auf diese Weise lassen sich zwei bzw. drei verschiedene Arten von Kontaktelektroden bzw. Kontaktstellen auf Kontaktierung bzw. korrekte Zuordnung hin überprüfen.

Vorzugsweise ist der Leitungswellenwiderstand des ersten Boden-Teilstromkreises anders, insbesondere größer als der Leitungswellenwiderstand des zweiten Boden-Teilstromkreises und/oder des dritten Boden-Teilstromkreises. Dadurch werden Hochfrequenzsignale im ersten Boden-Teilstromkreis anders, insbesondere stärker gedämpft. Auf diese Weise lässt sich ermitteln, ob der erste Boden-Teilstromkreis in dem mit dem Hochfrequenzsignal beaufschlagten Stromkreis ist.

Um den Leitungswellenwiderstand des ersten Boden-Teilstromkreises zu erhöhen, weisen mehrere der ersten Kontaktflächen ein Widerstandselement auf, das den Leitungswellenwiderstand der der jeweiligen Kontaktfläche zugeordneten elektrischen Leitung erhöht.

Vorzugweise umgibt das Widerstandselement jeweils die elektrische Leitung und/oder ist aus einem Ferrit, insbesondere aus einem Ferritlochkern. Insbesondere weist der Großteil der ersten Kontaktflächen ein Widerstandselement auf.

In einer Ausführungsform der Erfindung sind die ersten Kontaktbereiche Schutzkontaktbereiche und die zweiten Kontaktbereiche Neutralkontaktbereiche oder Phasenkontaktbereiche, um eine sichere Zuordnung der Schutzkontaktbereiche und damit des Schutzleiters zu ermöglichen.

Auch ist es denkbar, dass die ersten Kontaktbereiche mit dem Minuspol und die zweiten Kontaktbereiche mit dem Pluspol eines Gleichstromnetzes oder einer Gleichstromquelle verbunden sind oder umgekehrt.

Die zweiten Kontaktbereiche können ausschließlich Neutralkontaktbereiche oder ausschließlich Phasenkontaktbereiche sein. Falls dritte Kontaktbereiche vorhanden sind, sind dies entweder Phasenkontaktbereiche oder Neutralkontaktbereiche, sodass alle drei Arten von Kontaktbereichen vorhanden sind. Auf diese Weise lässt sich eine elektrische Kontaktierung mit Schutzleitern zuverlässig herstellen. Die Funktion von Neutralkontaktbereichen und Phasenkontaktbereichen kann dabei insbesondere nicht vertauscht werden.

In einer Ausgestaltung der Erfindung sind die ersten Kontaktbereiche, die zweiten Kontaktbereiche und/oder die dritten Kontaktbereiche drehsymmetrisch um eine Symmetrieachse senkrecht zur Zielfläche angeordnet sind, wodurch die Kontaktelektroden der Fahrzeugkontakteinheit auf einfache Weise automatisiert zu den richtigen Kontaktbereichen bewegt werden können.

Die Symmetrieachse verläuft zum Beispiel senkrecht zur Zielfläche und/oder einer der Kontaktflächen. Dabei kann die gesamte Bodenkontakteinheit drehsymmetrisch sein und z.B. keine asymmetrischen Führungen aufweisen.

Alternativ oder zusätzlich löst ein automatisches Fahrzeugkoppelsystem zur konduktiven Verbindung einer Bodenkontakteinheit und einer Fahrzeugkontakteinheit mit einer Fahrzeugkontakteinheit und einer Bodenkontakteinheit die Aufgabe, wobei die Fahrzeugkontakteinheit und/oder die Bodenkontakteinheit eine Messeinheit und eine Signalquelle für Hochfrequenzsignale aufweist.

Alternativ oder zusätzlich wird die Aufgabe durch ein Verfahren zur Überprüfung der Kontaktierung und der Zuordnung von Kontaktstellen in einem automatischen Fahrzeugkoppelsystem gelöst, mit den folgenden Schritten:
a) Herstellen eines physischen Kontaktes zwischen den Kontaktelektroden der Fahrzeugkontakteinheit und den Kontaktflächen der Bodenkontakteinheit, sodass wenigstens ein Stromkreis aus dem ersten Boden-Teilstromkreis einerseits und dem ersten Fahrzeug-Teilstromkreis andererseits gebildet wird,
b) Erzeugen wenigstens eines Hochfrequenzsignals durch die Signalquelle,
c) Zuführen des wenigstens einen Hochfrequenzsignals zum wenigstens einen gebildeten Stromkreis,
d) Messen einer Hochfrequenzantwort des wenigstens einen gebildeten Stromkreises auf das wenigstens eine Hochfrequenzsignal durch die Messeinheit, und
e) Ermitteln anhand der gemessenen Hochfrequenzantwort, ob die ersten Kontaktelektroden mit den ersten Kontaktflächen in Kontakt stehen.

Dabei wird beispielsweise die korrekte Kontaktierung und Zuordnung angenommen, falls die Hochfrequenzantwort mit einer Referenzantwort, die auch ein Bereich sein kann, übereinstimmt. Im Falle von drei verschiedenen Kontaktelektroden bzw. Kontaktflächen können die Stromkreise z. B. aus den ersten Teilstromkreisen, den zweiten Teilstromkreisen und den dritten Teilstromkreisen zusammengesetzt sein, wodurch theoretisch sechs verschiedene Stromkreise möglich sind.

Die Überprüfung der Kontaktierung und der Zuordnung von Kontaktstellen beruht auf dem Grundgedanken, dass der wenigstens eine Stromkreis zu einer charakteristischen Hochfrequenzantwort führt, sodass das Messen der Hochfrequenzantwort und die Analyse der Hochfrequenzantwort Informationen darüber geben, welcher Stromkreis gebildet und gemessen wurde, genauer gesagt aus welchen beiden Teilstromkreisen der gemessene Stromkreis zusammengesetzt ist. Durch die Kenntnis der beiden Teilstromkreise kann dann darauf geschlossen werden, welche Kontaktelektroden mit welchen Kontaktbereichen bzw. Kontaktflächen in Kontakt sind, wodurch die Zuordnung der Kontaktstelle überprüft werden kann. Auch der Fall, dass kein geschlossener Stromkreis gebildet ist, kann ermittelt werden.

Vorzugsweise sind die mehreren zweiten Kontaktelektroden der Fahrzeugkontakteinheit miteinander elektrisch verbunden und bilden einen zweiten Fahrzeug-Teilstromkreis oder die zweiten Kontaktflächen der Bodenkontakteinheit sind miteinander elektrisch verbunden und bilden einen zweiten Boden-Teilstromkreis, wobei der wenigstens eine Stromkreis aus dem ersten Boden-Teilstromkreis oder dem zweiten Boden-Teilstromkreis einerseits und dem ersten Fahrzeug-Teilstromkreis und/oder dem zweiten Fahrzeug-Teilstromkreis andererseits gebildet wird. Anhand der gemessenen Hochfrequenzantwort wird ermittelt, ob die ersten Kontaktelektroden oder die zweiten Kontaktelektroden mit den ersten Kontaktflächen oder mit den zweiten Kontaktflächen in Kontakt stehen. Auf diese Weise können verschiedene Stromkreise aus verschiedenen Teilstromkreisen erkannt werden.

Beispielsweise werden das Hochfrequenzsignal und/oder die Hochfrequenzantwort in der Fahrzeugkontakteinheit erzeugt bzw. gemessen und/oder das Hochfrequenzsignal und/oder die Hochfrequenzantwort werden in der Bodenkontakteinheit erzeugt bzw. gemessen, wodurch sowohl die Fahrzeugkontakteinheit als auch die Bodenkontakteinheit zur Überprüfung der Kontaktierung und der Zuordnung fähig sind.

Um eine möglichst große Sicherheit bei der Überprüfung der Kontaktierung und der Zuordnung von Kontaktstellen zu erreichen, werden das wenigstens eine Hochfrequenzsignal und/oder die entsprechende Hochfrequenzantwort in einem der Fahrzeugteilstromkreise, insbesondere dem ersten Fahrzeug-Teilstromkreis erzeugt bzw. gemessen und/oder das wenigstens eine Hochfrequenzsignal und/oder die entsprechende Hochfrequenzantwort werden in einem der Boden-Teilstromkreise, insbesondere dem ersten Boden-Teilstromkreis erzeugt bzw. gemessen.

Beispielsweise wird die Dämpfung der Hochfrequenzantwort im Stromkreis bestimmt und anhand der bestimmten Dämpfung ermittelt, ob die ersten Kontaktelektroden mit den ersten Kontaktflächen, mit den zweiten Kontaktflächen oder keiner Kontaktfläche in Kontakt stehen.

Dabei kann jeder der Teilstromkreise einen anderen Leitungswellenwiderstand aufweisen. Insbesondere weisen die Schutzkontaktbereiche einen höheren Leitungswellenwiderstand und damit eine höhere Dämpfung auf als die Phasenkontaktbereiche und die Neutralkontaktbereiche. Dementsprechend haben die Teilstromkreise, die die Schutzkontaktbereiche enthalten, eine größere Dämpfung.

In einer Ausgestaltung der Erfindung werden, nachdem ermittelt wurde, dass die ersten Kontaktelektroden mit den ersten Kontaktflächen in Kontakt stehen, Daten mittels der Signalquelle an die Messeinheit übermittelt, wodurch eine Datenübertragung zwischen dem Fahrzeug und dem übrigen Fahrzeugbatterieladesystem ermöglicht wird. Die Daten können dabei über die gleiche Leitung bzw. die gleichen Kontaktstellen wie der Ladestrom übertragen werden.

Beispielsweise wird, nachdem ermittelt wurde, dass die ersten Kontaktelektroden mit den ersten Kontaktflächen in Kontakt stehen, kontinuierlich oder in regelmäßigen Abständen durch die Signalquelle und die Messeinheit überprüft, ob der Kontakt zwischen den ersten Kontaktelektroden und den ersten Kontaktflächen weiterhin besteht. Bei Unterbrechung des Kontaktes wird eine Notfunktion aktiviert. Auf diese Weise kann auf unvorhergesehene Situationen, wie das ungeplante verschieben des Fahrzeugs, reagiert werden. Zum Beispiel enthält die Notfunktion das Abschalten des Ladestroms.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 schematisch ein erfindungsgemäßes Fahrzeugkoppelsystem mit einer erfindungsgemäßen Fahrzeugverbindungsvorrichtung und einer erfindungsgemäßen Bodenkontakteinheit,
- Figur 2a eine Draufsicht auf die erfindungsgemäße Bodenkontakteinheit nach Figur 1,
- Figur 2b eine Schnittansicht durch zwei benachbarte Kontaktelektroden der Bodenkontakteinheit nach Figur 1,
- Figur 3 schematisch die Anordnung der verschiedenen Kontaktbereiche und deren Verkabelung bzw. Verdrahtung der Bodenkontakteinheit nach Figur 1,
- Figur 4 eine stark vereinfachte teilweise Schnittansicht der Fahrzeugverbindungsvorrichtung nach Figur 1,
- Figur 5 eine schematische Unteransicht der Fahrzeugverbindungsvorrichtung nach Figur 1,
- Figur 6 schematisch die Anordnung der Kontaktelektroden und deren Verkabelung der Fahrzeugverbindungsvorrichtung nach Figur 5,
- Figur 7a die Bodenkontakteinheit nach Figur 1 in Kontakt mit der Fahrzeugkontakteinheit nach Figur 1 in korrekt gekoppelter Stellung,
- Figur 7b einen der durch die Kopplung nach Figur 7a gebildeten Stromkreise,
- die Figuren 8a und 9a eine zur Figur 7a ähnliche Situation, wobei die Fahrzeugkontakteinheit gegenüber der Bodenkontakteinheit verdreht ist,
- die Figuren 8b und 9b ein sich aus der Anordnung gemäß Figur 8a bzw. Figur 9a ergebender Stromkreis,
- Figur 10 einen Teil eines Schaltplans einer zweiten Ausführungsform eines erfindungsgemäßen Fahrzeugkoppelsystems,
- Figur 11 eine stark vereinfachte teilweise Schnittansicht einer dritten Ausführungsform einer erfindungsgemäßen Fahrzeugverbindungsvorrichtung,
- Figur 12 schematisch die Anordnung der verschiedenen Kontaktbereiche einer vierten Ausführungsform einer erfindungsgemäßen Bodenkontakteinheit,
- Figur 13 schematisch die Anordnung der Kontaktelektroden einer vierten Ausführungsform einer erfindungsgemäßen Fahrzeugverbindungsvorrichtung, und
- die Figuren 14a 14b, 14c und 14d einen Teil eines Schaltplans einer weiteren Ausführungsform eines erfindungsgemäßen Fahrzeugkoppelsystems während verschiedenen Schritten bei der Ermittlung der kontaktierten Neutralkontaktbereiche.

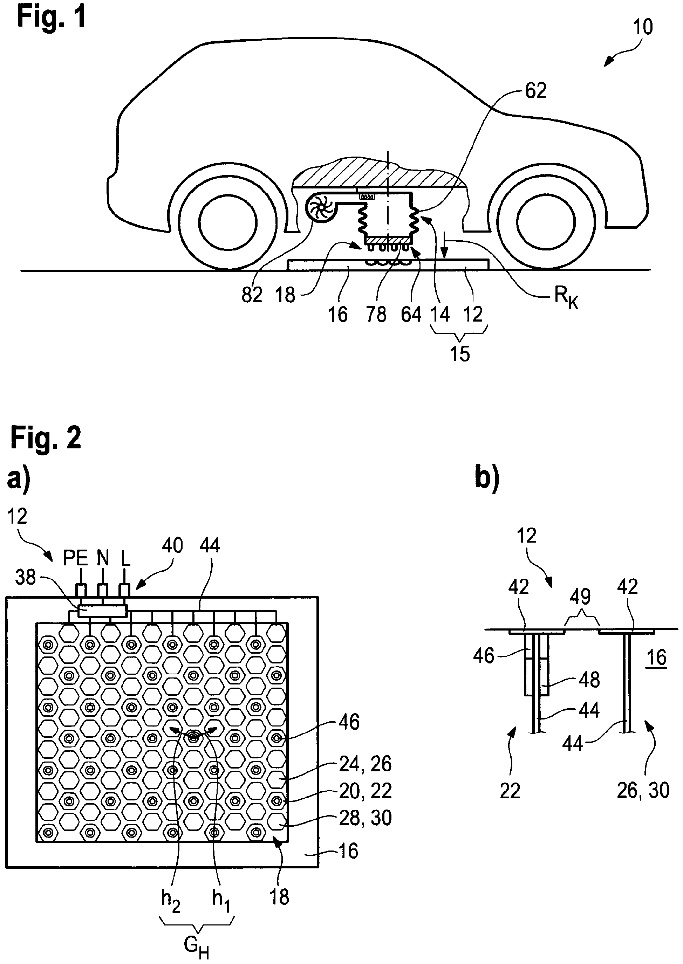

In Figur 1 ist ein Fahrzeug 10 dargestellt, beispielsweise ein batteriebetriebenes Fahrzeug oder ein Plug-in-Hybridfahrzeug, das auf oder über einer Bodenkontakteinheit 12 zum Laden der Batterie abgestellt ist.

Am Unterboden des Fahrzeugs 10 ist eine Fahrzeugverbindungsvorrichtung 14 befestigt, die das Fahrzeug 10 mit der Bodenkontakteinheit 12 elektrisch verbinden kann.

Die Bodenkontakteinheit 12 und die Fahrzeugverbindungsvorrichtung 14 sind Teil eines automatischen Fahrzeugkoppelsystems 15, das wiederum Teil eines Fahrzeugbatterieladesystems ist.

In Figur 2a ist die Bodenkontakteinheit 12 in Draufsicht dargestellt.

Die Bodenkontakteinheit 12 weist einen plattenförmigen Grundkörper 16 auf, auf dessen Oberseite eine Zielfläche 18 vorgesehen ist.

In der Zielfläche 18 sind mehrere verschiedene Kontaktbereiche vorgesehen.

In der gezeigten Ausführungsform sind erste Kontaktbereiche 20, die beispielsweise Schutzkontaktbereiche 22 sind, zweite Kontaktbereiche 24, die beispielsweise Neutralkontaktbereiche 26 sind, sowie dritte Kontaktbereiche 28 vorgesehen, die beispielsweise Phasenkontaktbereiche 30 sind, sodass die Bodenkontakteinheit beispielsweise zum Laden des Fahrzeugs 10 mittels Wechselstrom eingerichtet ist.

Der Begriff "Neutralkontaktbereich" steht als Kurzform für "Neutralleiterkontaktbereich".

Denkbar ist jedoch auch, dass das Fahrzeug 10 durch Gleichstrom geladen werden soll. Hierzu kann der zweite Kontaktbereich 24 ein positiver Gleichstromkontaktbereich und der dritte Kontaktbereich 28 ein negativer Gleichstromkontaktstrombereich sein oder umgekehrt.

Die Kontaktbereiche 20, 24, 28 bzw. 22, 26, 30 weisen jeweils wenigstens eine Kontaktfläche auf. Somit hat jeder der ersten Kontaktbereiche 20 eine erste Kontaktfläche, jeder der zweiten Kontaktbereiche 24 eine zweite Kontaktfläche und jeder der dritten Kontaktbereiche 28 eine dritte Kontaktfläche.

Denkbar ist jedoch auch, dass jeder der Kontaktbereiche 20, 24, 28 bzw. 22, 26, 30 mehrere Kontaktflächen aufweist.

Die Kontaktbereiche 20, 24, 28 bzw. 22, 26, 30 sind jeweils geschlossene Flächen mit einer sechseckigen, insbesondere regelmäßigen sechseckigen oder kreisförmigen Kontur. Gegebenenfalls können die Ecken des Sechsecks einen Radius aufweisen.

Die Kontaktbereiche 20, 24, 28 bzw. 22, 26, 30 und/oder die Kontaktflächen können in einer Ebene liegen, beispielsweise ist die Zielfläche 18 diese Ebene.

Die Kontaktbereiche 20, 24, 28 bzw. 22, 26, 30 sind in einem Hauptmuster angeordnet. Das Hauptmuster ist in der gezeigten Ausführungsform ein zweidimensionales Bravais-Gitter, genauer gesagt ein hexagonales Gitter. Das Hauptmuster ist somit ein Hauptgitter G_{H} mit zwei Basisvektoren h₁, h₂ mit der gleichen Länge, die einen Winkel von 120° miteinander einschließen.

Das Hauptmuster bzw. das Hauptgitter G_{H} erstreckt sich über die gesamte Zielfläche 16.

Die Bodenkontakteinheit 12 weist eine Bodensteuereinheit 38 auf, die mit zumindest jedem der Kontaktbereiche 24, 28 bzw. 26, 30 elektrisch verbunden ist, insbesondere mit allen Kontaktbereichen 20, 24, 28 bzw. 22, 26, 30.

Außerdem hat die Bodenkontakteinheit 12 drei Bodenanschlüsse 40, nämlich einen ersten Bodenanschluss 40.1, einen zweiten Bodenanschluss 40.2 und einen dritten Bodenanschluss 40.3, die mit entsprechenden Anschlüssen des örtlichen Stromnetzes (nicht gezeigt) am Ort der Bodenkontakteinheit 12 verbunden sind.

Dabei sind, wie später im Detail erläutert wird, die ersten Kontaktbereiche 20 bzw. Schutzkontaktbereiche 22 mit dem Schutzleiter des Stromnetzes über den ersten Bodenanschluss 40.1 verbunden, die zweiten Kontaktbereiche 24 bzw. Neutralkontaktbereiche 26 sind mit dem Neutralleiter des Stromnetzes über den zweiten Bodenanschluss 40.2 elektrisch verbunden und die dritten Kontaktbereiche 28 bzw. Phasenkontaktbereiche 30 sind mit der Phase bzw. einem Außenleiter des Stromnetzes über den dritten Bodenanschluss 40.3 verbunden.

Im Fall von Gleichstromladen sind der positive und der negative Gleichstromkontaktbereich über den zweiten bzw. dritten Bodenanschluss 40.2, 40.3 mit dem positiven bzw. negativen Pol einer Gleichstromquelle zum Laden verbunden.

Im Folgenden werden zur Vereinfachung lediglich die Begrifflichkeiten Schutzkontaktbereiche 22, Neutralkontaktbereiche 26 sowie Phasenkontaktbereiche 30 verwendet, wobei hierunter die ersten Kontaktbereiche 20, die zweiten Kontaktbereiche 24 und die dritten Kontaktbereiche 28 ebenso zu verstehen sind.

Wie in Figur 2b dargestellt, sind die Schutzkontaktbereiche 22 (links dargestellt) anders ausgebildet als die Neutralkontaktbereiche 26 und die Phasenkontaktbereiche 30 (als gemeinsames Beispiel rechts dargestellt).

Die Neutralkontaktbereiche 26 und die Phasenkontaktbereiche 30 haben eine flache Kontaktplatte 42 sowie einer elektrischen Leitung 44. Die Kontaktplatte 42 ist zum Beispiel sechseckig und bildet die Kontaktfläche. Die elektrische Leitung 44 erstreckt sich von der Kontaktplatte 42 durch den Grundkörper 16, über die Bodensteuereinheit 38 zu den Stromanschlüssen 40.

Neben der Kontaktplatte 42 und der elektrischen Leitung 44 weist der Großteil, insbesondere alle der Schutzkontaktbereiche 22 ein magnetisches Element 46 auf.

Das magnetische Element 46 ist im gezeigten Ausführungsbeispiel ein ferromagnetisches Element in Form eines Stahlzylinders, der die elektrische Leitung 44 umgibt. Das heißt, dass sich die elektrische Leitung 44 durch das magnetische Element 46 erstreckt.

Zwischen dem magnetischen Element 46 und der Kontaktplatte 42 und/oder auf der von der Kontaktplatte 42 abgewandten Seite des magentischen Elementes 46 ist zudem ein Widerstandselement 48 vorgesehen, das die elektrische Leitung 44 ebenfalls umgibt.

Das Widerstandselement 48 wirkt als Induktivität und erhöht den Leitungswellenwiderstand der elektrischen Leitung 44 für Hochfrequenzsignale. Es ist zum Beispiel u.a. aus einem Ferrit.

Denkbar ist auch, dass das magnetische Element 46 und das Widerstandselement 48 als ein einstückiges Bauteil aus einem Material ausgeführt sind, das sowohl magentisch ist als auch den Leitungswellenwiderstand erhöht.

Das magnetische Element 46 und das Widerstandselement 48 sind im Grundkörper 16 vorgesehen.

Die Kontaktplatten 42 von benachbarten Kontaktbereichen 22, 26, 30 sind durch einen Isolationsabschnitt 49 oder mehrere Isolationsabschnitte 49 voneinander getrennt.

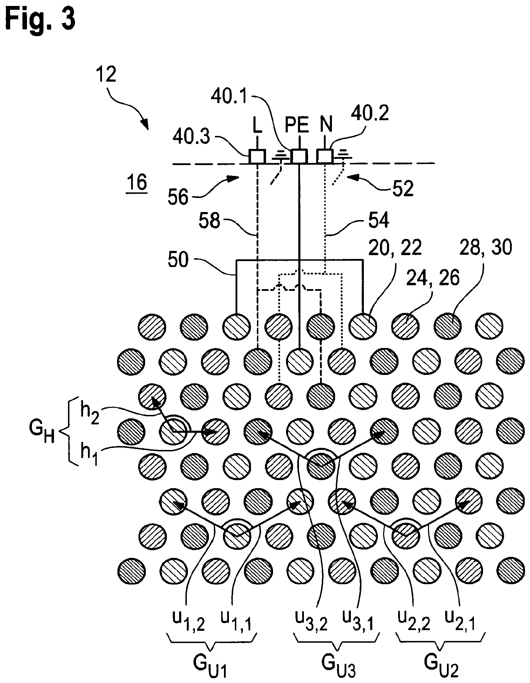

In Figur 3 ist das Hauptgitter G_{H} aus den Kontaktbereichen 20, 24, 28 bzw. 22, 26, 30 ausschnittsweise dargestellt und die Verkabelung schematisch angedeutet. Zur Vereinfachung sind die Kontaktbereiche 20, 24, 28 bzw. 22, 26, 30 als Kreise dargestellt.

Die in Figur 3 eingezeichnete Schaltskizze dient lediglich der Anschauung und wird größtenteils durch die Bodensteuereinheit 38 geschaltet.

Die Schutzkontaktbereiche 22, die Neutralkontaktbereiche 26 und die Phasenkontaktbereiche 30 sind jeweils in einem eigenen Untermuster, hier jeweils in Form eines zweidimensionalen Bravais-Gitters, also einem Untergitter, angeordnet.

Die Schutzkontaktbereiche 22 sind in einem ersten Untergitter G_{U1} mit den Basisvektoren u_{1,1}, u_{1,2} angeordnet. Auch das erste Untergitter G_{U1} ist ein hexagonales Gitter, sodass die beiden Basisvektoren u_{1,1} und u_{1,2} den gleichen Betrag haben und einen Winkel von 120° miteinander einschließen.

Gleichermaßen sind die Neutralkontaktbereiche 26 in einem zweiten Untergitter G_{U2} mit den Basisvektoren u_{2,1}, u_{2,2} angeordnet, die ebenfalls den gleichen Betrag haben und einen Winkel von 120° einschließen.

Auch die Phasenkontaktbereiche 30 liegen auf einem hexagonalen, dritten Untergitter Gus mit den gleich langen Basisvektoren u_{3,1}, u_{3,2}, die einen Winkel von 120° einschließen.

Die drei Untergitter G_{U1}, G_{U2}, Gus sind ineinander verschachtelt angeordnet, sodass die drei verschiedenen Kontaktbereiche 22, 26, 30 entlang der Richtung einer der Basisvektoren h₁, h₂ des Hauptgitters G_{H} im durchlaufenden Wechsel auftreten.

In anderen Worten sind die zu einem beliebigen betrachteten Kontaktbereich 22, 26, 30 am nächsten benachbarten Kontaktbereiche 26, 28, 22 immer von einem anderen Typ als es der betrachtete Kontaktbereich 22, 26, 30 selbst ist.

Die Kontaktbereiche 22, 26, 30 bzw. die Kontaktflächen sind somit drehsymmetrisch um eine Drehachse senkrecht zur Zielfläche 18 angeordnet. Auch kann die gesamte Bodenkontakteinheit 12 drehsymmetrisch ausgeführt sein, d.h. wenigstens die sichtbaren und zur Verbindung mit der Fahrzeugverbindungsvorrichtung 14 benötigen Teile sind drehsymmetrisch angeordnet.

Die Schutzkontaktbereiche 22 sind mittels der elektrischen Leitungen 44 allesamt untereinander verbunden, wobei der Übersicht halber in Figur 3 nur drei Schutzkontaktbereiche 22 verbunden dargestellt sind.

Außerdem sind die Schutzkontaktbereiche 22 über einen der Stromanschlüsse 40 mit dem Schutzleiter des Stromnetzes verbunden, hier als PE bezeichnet.

Es ist denkbar, dass die Bodensteuereinheit 38 in der Lage ist, nur einzelne der Schutzkontaktbereiche 22 mit dem ersten Bodenanschluss 40.1 elektrisch zu verbinden.

Alle oder einige der Schutzkontaktbereiche 22 - also die miteinander elektrisch verbundenen Schutzkontaktbereiche 22 - können daher einen Teilstromkreis bilden, der im Folgenden als erster Boden-Teilstromkreis 50 bezeichnet wird.

Auch die Neutralkontaktbereiche 26 sind über die elektrischen Leitungen 44 mit dem zweiten Bodenanschluss 40.2 und dem Neutralleiter (N) des Stromnetzes verbunden.

Die Verbindung erfolgt über die Bodensteuereinheit 38, die gezielt nur einzelne der Neutralkontaktbereiche 26 mit dem zweiten Bodenanschluss 40.2 verbinden kann.

Außerdem kann die Bodensteuereinheit 38 bestimmte oder alle Neutralkontaktbereiche 26 erden, mit dem Neutralleiter verbinden, untereinander verbinden bzw. kurzschließen oder auf das Potenzial des Schutzleiters setzen, also mit dem ersten Bodenanschluss 40.1 verbinden. Dies ist hier durch einen ersten Schalter 52 angedeutet, der die Neutralkontaktbereiche 26 erdet.

Zumindest wenn alle oder einige der Neutralkontaktbereiche 26 geerdet sind, aber auch wenn alle oder einige der Neutralkontaktbereiche 26 mit dem Neutralleiter verbunden sind, untereinander verbunden bzw. kurzgeschlossen sind oder auf das Potenzial des Schutzleiters gelegt sind, sind diese elektrisch miteinander verbunden und können einen zweiten Teilstromkreis bilden, der im Folgenden als zweiter Boden-Teilstromkreis 54 bezeichnet wird.

In gleicher Weise wie die Neutralkontaktbereiche 26 stehen auch die Phasenkontaktbereiche 30 mit dem dritten Bodenanschluss 40.3 in Kontakt, der mit der Phase des Stromnetzes, hier als L bezeichnet, verbunden ist.

Auch diese Verbindung erfolgt über die elektrischen Leitungen 44 durch die Bodensteuereinheit 38, die selektiv auch nur einzelne der Phasenkontaktbereiche 30 mit dem entsprechenden dritten Bodenanschluss 40.3 verbinden kann.

Die Bodensteuereinheit 38 kann alle oder nur einige der Phasenkontaktbereiche 30 erden, mit dem Außenleiter verbinden, untereinander verbinden bzw. kurzschließen oder auf das Potenzial des Schutzleiters setzen, also mit dem ersten Bodenanschluss 40.1 verbinden. Dies ist durch einen zweiten Schalter 56 in Figur 3 angedeutet, der die Phasenkontaktbereiche 30 erdet.

Zumindest wenn einige oder alle der Phasenkontaktbereiche 30 geerdet oder mit dem Schutzleiterpotenzial verbunden sind, aber auch wenn alle oder einige der Phasenkontaktbereiche 30 mit dem Außenleiter verbunden oder untereinander verbunden bzw. kurzgeschlossen sind, können diese Phasenkontaktbereiche 30 über die elektrischen Leitungen 44 einen weiteren Teilstromkreis bilden, der im Folgenden als dritter Boden-Teilstromkreis 58 bezeichnet wird.

Die elektrische Verbindung bzw. der Kurzschluss der Kontaktbereiche 20, 24, 28 bzw. 22, 26, 30 untereinander ist vorzugsweise in der Bodenkontakteinheit 10 selbst vorgesehen.

Aufgrund der Widerstandselemente 48, die die elektrischen Leitungen 44 der Schutzkontaktbereiche 22 umgeben, ist der Leitungswellenwiderstand des ersten Boden-Teilstromkreises 50 gegenüber dem zweiten Boden-Teilstromkreis 54 und dem dritten Teilstromkreis 58 für Hochfrequenzsignale erhöht.

Unter einem Hochfrequenzsignal wird ein Signal mit einer Frequenz gleich oder größer als 10 Hz, insbesondere gleich oder größer als 1 kHz, insbesondere gleich oder größer als 200 kHz verstanden.

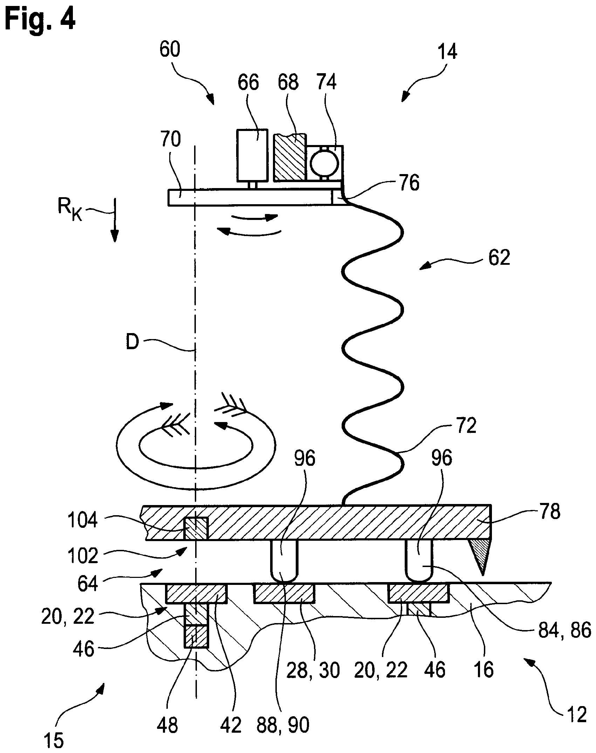

Die Fahrzeugverbindungsvorrichtung 14 ist in einer möglichen Ausführungsform in den Figuren 1 und 4 beispielhaft dargestellt.

Die Fahrzeugverbindungsvorrichtung 14 weist einen Ausrichtungsaktuator 60, einen Kontaktierungsaktuator 62 sowie eine Fahrzeugkontakteinheit 64 auf.

Der Ausrichtungsaktuator 60 hat im gezeigten Beispiel einen Elektromotor 66, einen Montageabschnitt 68 und ein Zahnrad 70.

Der Elektromotor 66 ist an dem Montageabschnitt 68 drehfest befestigt, wobei der Montageabschnitt 68 wiederum am Fahrzeug 10 selbst, z. B. der Karosserie befestigt sein kann.

Denkbar ist auch, dass der Elektromotor 66 direkt am Fahrzeug 10 montiert ist. In diesem Fall ist kein Montageabschnitt 68 notwendig.

Das Zahnrad 70 kann über die Ausgangswelle des Elektromotors 66 angetrieben werden.

Der Kontaktierungsaktuator 62 umfasst in der gezeigten Ausführungsform einen Faltenbalg 72, der ein fahrzeugseitiges Ende und ein Sockelende aufweist.

Der Kontaktierungsaktuator 62 ist mittels eines Lagers 74 am fahrzeugseitigen Ende des Faltenbalgs 72 am Montageabschnitt 68 drehbar gelagert. Außerdem weist der Faltenbalg 72 auf seiner Innenseite eine Verzahnung 76 auf, die mit dem Zahnrad 70 in Eingriff steht. Anstelle des Zahnradpaares 70 und 76 wären beispielsweise auch ein Riementrieb oder ein Schneckengetriebe möglich.

Am Sockelende des Faltenbalgs 72 ist die Fahrzeugkontakteinheit 64 vorgesehen. Genauer gesagt ist am Sockelende am Faltenbalg 72 ein Sockel 78 der Fahrzeugkontakteinheit 64 befestigt.

In der gezeigten vorgesehenen Montageposition ist der Sockel 78 parallel zum Boden und zur Bodenkontakteinheit 12.

Die Fahrzeugkontakteinheit 64 kann in vertikaler Richtung, d. h. senkrecht zum Sockel 78 und zur Bodenkontakteinheit 12 durch den Kontaktierungsaktuator 62 bewegt werden. Die vertikale Richtung wird daher auch als Kontaktierungsrichtung R_{K} bezeichnet. Eine Kombination bzw. mechanische Kopplung von Ausrichtungsaktuator 60 und Kontaktierungsaktuator 62 wäre ebenfalls denkbar.

Um die Fahrzeugkontakteinheit 64 in Richtung zur Bodenkontakteinheit 12 zu bewegen, wird der Faltenbalg 72 durch eine Druckluftquelle 82 aufgeblasen.

Durch Rückstellmechanismen, wie Federn, Seile, etc. innerhalb des Faltenbalgs (nicht gezeigt), kann der Faltenbalg 72 bei deaktivierter Druckluftquelle 82 zusammengezogen werden, wodurch die Fahrzeugkontakteinheit 64 nach oben, d. h. entgegen der Kontaktierungsrichtung R_{K} bewegt werden kann.

Denkbar ist auch, dass der Kontaktierungsaktuator 62 eine Kolben-Zylindereinheit ist, die die vertikale Bewegung in Kontaktierungsrichtung R_{K} der Fahrzeugkontakteinheit 14 ausführen kann.

Zur präzisen Ausrichtung kann der Ausrichtungsaktuator 60 dann die Fahrzeugkontakteinheit 64 bzw. den Sockel 78 um eine Drehachse D (siehe Figur 4) rotieren. Hierzu wird der Elektromotor 66 aktiviert, der daraufhin ein Drehmoment am Zahnrad 70 erzeugt. Das Drehmoment wird über die Verzahnung 76 auf den Faltenbalg 72 übertragen, der daraufhin gegenüber dem Montageabschnitt 68 rotiert.

Da der Sockel 78 drehfest mit dem Faltenbalg 72 verbunden ist, werden durch den Ausrichtungsaktuator 60 der Sockel 78 und damit die Fahrzeugkontakteinheit 64 um die Drehachse D verdreht.

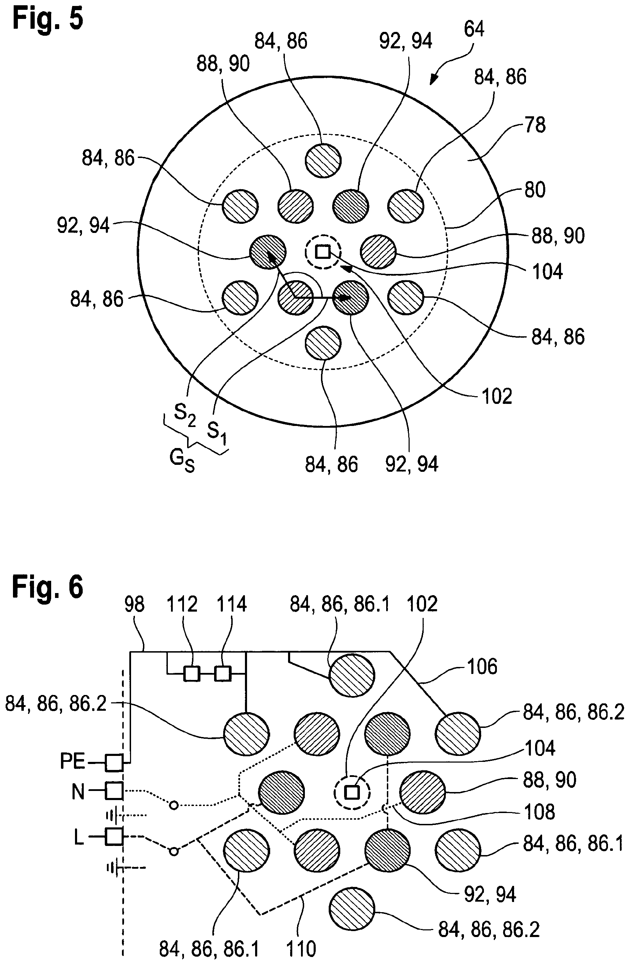

In Figur 5 ist eine Unteransicht des Sockels 78 dargestellt.

Auf der vom Kontaktierungsaktuator 62 und Ausrichtungsaktuator 60 abgewandten Seite, d.h. der Kontaktseite, weist die Fahrzeugkontakteinheit 64 einen Kontaktierungsbereich 80 auf, in dem mehrere Kontaktelektroden 84, 88, 92 bzw. 86, 90, 94 zur Kontaktierung der Kontaktflächen der Bodenkontakteinheit 12 vorgesehen sind.

Innerhalb des Kontaktierungsbereich 80 sind erste Kontaktelektroden 84, die im gezeigten Ausführungsbeispiel Schutzkontaktelektroden 86 sind, zweite Kontaktelektroden 88, die im gezeigten Ausführungsbeispiel Neutralelektroden 90 sind, und dritte Kontaktelektroden 92 vorgesehen, die im gezeigten Ausführungsbeispiel Phasenelektroden 94 sind, sodass die Fahrzeugkontakteinheit 64 beispielsweise zum Laden des Fahrzeugs 10 mittels Wechselstrom eingerichtet ist.

Denkbar ist jedoch auch, dass das Fahrzeug 10 durch Gleichstrom geladen werden soll. Hierzu kann die zweite Kontaktelektrode 88 eine positive Gleichstromkontaktelektrode und die dritte Kontaktelektrode 92 eine negative Gleichstromkontaktelektrode sein.

Die Funktion der Neutralelektroden 90 und der Phasenelektroden 94 bzw. der positiven und negativen Gleichstromkontaktelektroden ist insbesondere nicht vertauschbar.

Analog zu den Kontaktbereichen 20, 24, 28 bzw. 22, 26, 30 sind die Kontaktelektroden 84, 88, 92 bzw. 86, 90, 94 in einem Sockelmuster, auch hier in Form eines zweidimensionalen Bravais-Gitters, genauer gesagt einem hexagonalen Gitter, angeordnet. Das Sockelmuster wird daher im Folgenden Sockelgitter Gs genannt und hat die Basisvektoren s₁, s₂, die gleich lang sind und einen Winkel von 120° miteinander einschließen. Das Sockelgitter Gs entspricht im Wesentlichen dem Hauptgitter G_{H}.

Zudem kann einer der Gitterpunkte des Sockelgitters Gs im Mittelpunkt des Kontaktierungsbereiches 80 liegen.

Die Kontaktelektroden 84, 88, 92 bzw. 86, 90, 94 selbst werden durch vom Sockel 78 senkrecht abstehende Kontaktstifte 96 (Fig. 4) gebildet, die federnd gegenüber dem Sockel 78 gelagert sind.

Die Kontaktstifte 96 sind über elektrische Leitungen 98 mit einem Bordnetz (nicht gezeigt) des Fahrzeugs 10 verbunden.

Die ersten Kontaktelektroden 84 bzw. Schutzkontaktelektroden 86 sind mit dem Schutzkontaktleiter des Bordnetzes, die zweiten Kontaktelektroden 88 bzw. Neutralelektroden 90 sind mit dem Neutralleiter des Bordnetzes und die dritten Kontaktelektroden 92 bzw. Phasenelektroden 94 sind mit der Phase des Bordnetzes des Fahrzeugs 10 verbunden.

Im Fall von Gleichstromladen sind die positive und die negative Gleichstromkontaktelektrode mit dem positiven bzw. negativen Pol der Batterie des Fahrzeugs 10 zum Laden verbunden.

Im Folgenden wird zur Vereinfachung lediglich auf die Schutzkontaktelektroden 86, die Neutralelektroden 90 und die Phasenelektroden 94 Bezug genommen, womit auch die ersten Kontaktelektroden 84, die zweiten Kontaktelektroden 88 bzw. die dritten Kontaktelektroden 92 gleichermaßen gemeint sind.

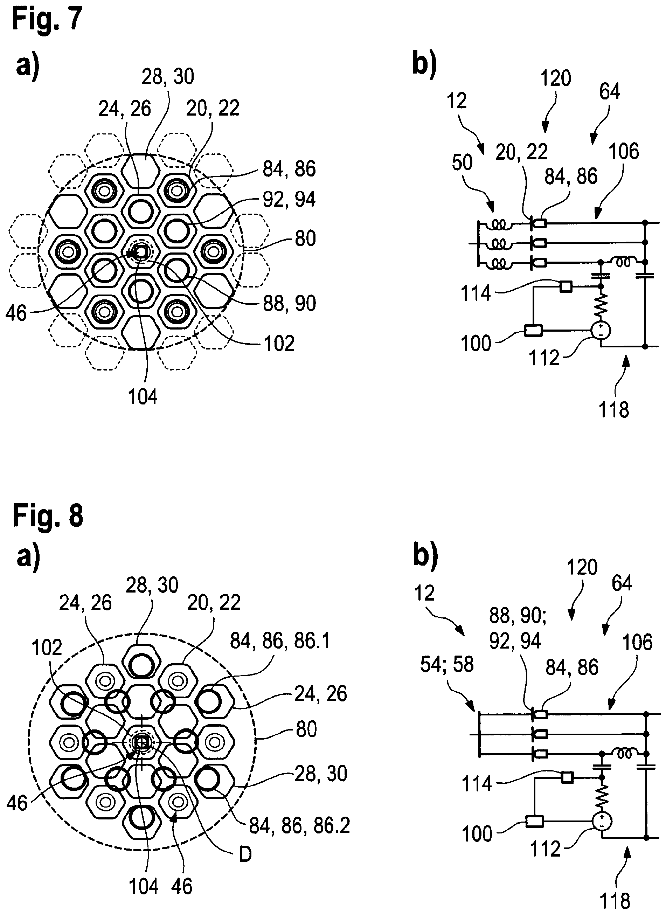

Die Verbindung kann über eine Steuereinheit 100 der Fahrzeugverbindungsvorrichtung 14 erfolgen, die die einzelnen Kontaktelektroden 86, 90, 94 schaltet. Die Steuereinheit 100 ist aus Gründen der Übersichtlichkeit nur in den Figuren 7b, 8b und 9b dargestellt. In Figur 6 ist die Steuereinheit 100 durch Schalter angedeutet, die die Funktion der Steuereinheit 100 illustrieren.

Der Kontaktierungsbereich 80 weist in seinem Mittelpunkt einen Magnetbereich 102 auf.

Im Magnetbereich 102 ist im oder am Sockel 78 ein Kontaktmagnet 104 vorgesehen, der insbesondere auf einem der Gitterpunkte des Sockelgitters Gs liegt.

Der Kontaktmagnet 104 ist beispielsweise ein Elektromagnet, der ein- und abschaltbar ist. Der Kontaktmagnet 104 kann jedoch auch anderweitig schaltbar gegenüber dem magnetischen Element 46 der Bodenkontakteinheit 12 sein, zum Beispiel durch entsprechende Bewegungen.

Eine Kontaktelektrode ist im gezeigten Ausführungsbeispiel im Magnetbereich 102 nicht vorhanden.

Selbstverständlich kann im Magnetbereich 102 auch eine Schutzkontaktelektrode 86 vorgesehen, wobei der Kontaktmagnet 104 der Schutzkontaktelektrode 86 zugeordnet ist. Es ist jedoch auch denkbar, dass eine andere Kontaktelektrode im Magnetbereich 102 vorgesehen ist.

Wie insbesondere in Figur 6 zu erkennen, sind die übrigen Kontaktelektroden 86, 90, 94 in Bezug auf den Gitterpunkt innerhalb des Magnetbereiches 102 angeordnet.

Die zum Magnetbereich 102 nächsten Nachbarn, d. h. diejenigen Gitterpunkte bzw. Kontaktelektroden 90, 94 auf den Gitterpunkten mit dem geringsten Abstand zum Magnetbereich 102, sind Neutralelektroden 90 und Phasenelektroden 94, die im Wechsel angeordnet sind.

Die zum Magnetbereich 102 übernächsten Nachbarn, d. h. diejenigen Gitterpunkte bzw. Kontaktelektroden 86 mit dem zweitkleinsten Abstand zum Magnetbereich 102, sind Schutzkontaktelektroden 86.

Die Schutzkontaktelektroden 86 weisen keinen Magneten auf oder können teilweise Magneten aufweisen.

Somit sind im gezeigten Ausführungsbeispiel sechs Schutzkontaktelektroden 86, drei Neutralelektroden 90 sowie drei Phasenelektroden 94 vorgesehen. Denkbar sind auch nur drei Schutzkontaktelektroden 86, drei Neutralelektroden 90, sowie drei Phasenelektroden 94.

Die Kontaktelektroden 86, 90, 94 sind somit drehsymmetrisch um eine Symmetrieachse senkrecht zur Kontaktseite bzw. parallel zur Längserstreckung einer der Kontaktelektroden 86, 90, 94 angeordnet. Die Symmetrieachse verläuft beispielsweise durch den Magnetbereich 102 und/oder den Mittelpunkt des Kontaktierungsbereiches 80.

Auch kann die gesamte Fahrzeugkontakteinheit 64 drehsymmetrisch ausgeführt sein, d.h. wenigstens die sichtbaren und zur Verbindung mit der Bodenkontakteinheit 12 benötigen Teile sind drehsymmetrisch angeordnet.

Analog wie in Figur 3 wird in Figur 6 schematisch die Verkabelung der Kontaktelektroden 86, 90, 94 angedeutet. Diese erfolgt beispielsweise über die Steuereinheit 100 der Fahrzeugverbindungsvorrichtung 14.

Die Schutzkontaktelektroden 86 sind mit einem Schutzleiter (PE) des Bordnetzes des Fahrzeugs 10 über wenigstens eine elektrische Leitung 98 verbunden. Sie können somit einen Teilstromkreis bilden, der im Folgenden als erster Fahrzeug-Teilstromkreis 106 bezeichnet wird.

Ähnlich wie die Neutralkontaktbereiche 26 sind alle oder einige der Neutralelektroden 90 über die Steuereinheit 100 der Fahrzeugverbindungsvorrichtung 14 entweder mit dem Neutralleiter (N) des Bordnetzes des Fahrzeugs 10 elektrisch verbunden, unabhängig von der Steuereinheit 100 untereinander elektrisch verbunden bzw. kurzgeschlossen, fahrzeugseitig mit keinem weiteren Stromkreis bzw. Teilen des Fahrzeugs 10 verbunden oder geerdet bzw. mit dem Schutzleiter des Bordnetzes des Fahrzeugs 10 verbunden.

Die Steuereinheit 100 der Fahrzeugverbindungsvorrichtung 14 kann die elektrische Verbindung der Neutralelektroden 90 verändern, insbesondere einige oder alle Neutralelektroden 90 elektrisch miteinander verbinden bzw. kurzschließen. Auch können die Neutralelektroden 90 unabhängig von der Steuereinheit 100 permanent elektrisch miteinander verbunden sein. Zumindest im geerdeten Zustand, aber auch wenn alle oder einige der Neutralelektroden 90 mit dem Neutralleiter verbunden sind, untereinander verbunden bzw. kurzgeschlossen sind oder auf das Potenzial des Schutzleiters gelegt sind, können die Neutralelektroden über ihre zugeordneten elektrischen Leitungen 98 zusammen einen Teilstromkreis bilden, der im Folgenden als zweiter Fahrzeug-Teilstromkreis 108 bezeichnet wird.

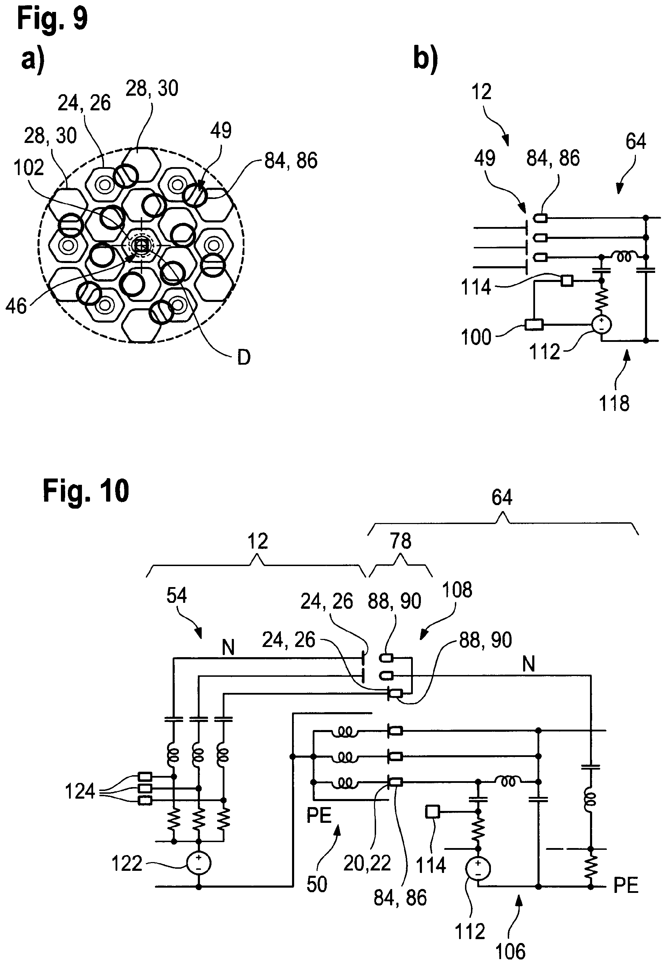

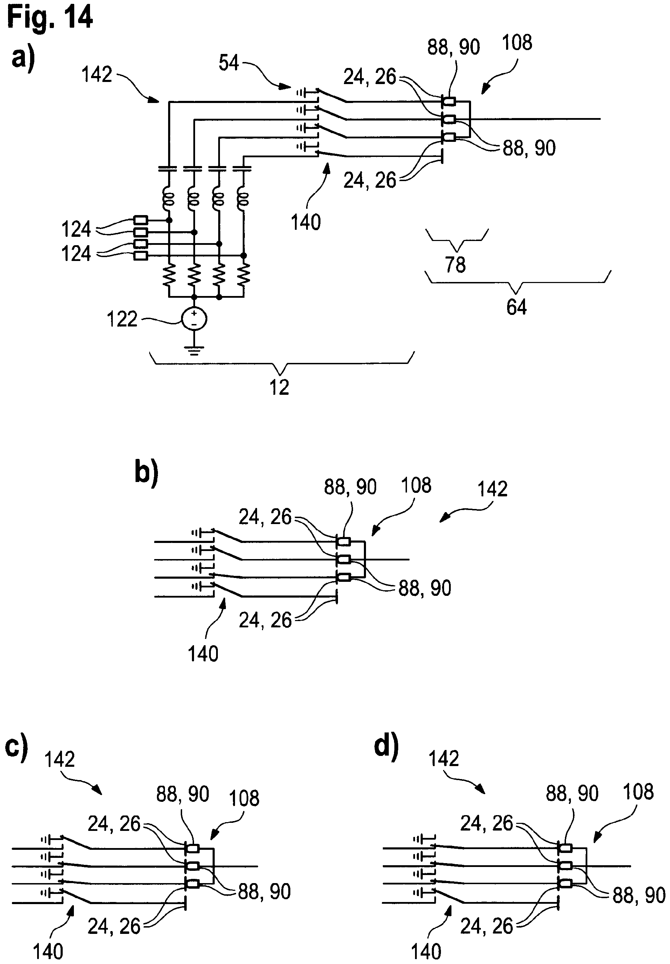

Zum Beispiel kann eine Leitung im Sockel 78 die Neutralelektroden 90 miteinander verbinden bzw. kurzschließen, um den zweiten Fahrzeug-Teilstromkreis 108 zu bilden. Eine solche Leitung im Sockel 78 ist beispielsweise in den Figuren 10 und 14 dargestellt.

In gleicher Weise sind die Phasenelektroden 94 über elektrische Leitungen 98 mit einem Außenleiter des Bordnetzes des Fahrzeugs 10 verbunden, untereinander elektrisch verbunden bzw. kurzgeschlossen, fahrzeugseitig mit keinem weiteren Stromkreis bzw. Teilen des Fahrzeugs 10 verbunden oder mit dem Schutzleiterpotenzial verbunden. Auch diese Schaltung kann von der Steuereinheit 100 der Fahrzeugverbindungsvorrichtung 14 geändert werden. Auch die miteinander elektrisch verbundenen Phasenelektroden 94 können einen Teilstromkreis bilden, der im Folgenden als dritter Fahrzeug-Teilstromkreis 110 bezeichnet wird.

Denkbar ist auch für die Phasenelektroden 94, dass eine permanente elektrische Verbindung zwischen den Phasenelektroden 94 besteht, um den dritten Fahrzeug-Teilstromkreis 110 zu bilden. Dies ist selbstverständlich nur dann möglich, wenn nur eine Phase vorhanden ist, wie beim einphasigen Wechselstromladen oder beim Gleichstromladen.

Diese Verbindung der Phasenelektroden 94 untereinander kann ebenfalls durch eine Leitung im Sockel 78 erfolgen.

Die elektrische Verbindung bzw. der Kurzschluss der Kontaktelektroden 84, 88, 92 bzw. 86, 90, 94 untereinander, die den entsprechenden Teilstromkreis bereitstellt, ist zum Beispiel in der Fahrzeugkontakteinheit 64 selbst, insbesondere lediglich im Sockel 78 vorgesehen.

Die Fahrzeugverbindungsvorrichtung 14 weist in der gezeigten Ausführungsform zudem eine Signalquelle 112 für Hochfrequenzsignale sowie eine Messeinheit 114 für Hochfrequenzsignale auf, die mit dem ersten Fahrzeug-Teilstromkreis 106 verbunden sind.

Um das Fahrzeug 10 an das örtliche Stromnetz anzuschließen, d. h. um eine elektrische Verbindung zwischen der Fahrzeugkontakteinheit 64 und der Bodenkontakteinheit 12 herzustellen, wird das Fahrzeug 10 mit der Fahrzeugverbindungsvorrichtung 14 oberhalb der Bodenkontakteinheit 12 abgestellt, wie dies zum Beispiel in Figur 1 dargestellt ist.

Nachdem das Fahrzeug abgestellt wurde, wird die Fahrzeugkontakteinheit 64 durch den Kontaktierungsaktuator 62 in Kontaktierungsrichtung R_{K} zur Bodenkontakteinheit 12 hin bewegt, d. h. vertikal abgelassen und der Kontaktmagnet 104 eingeschaltet.

In dem gezeigten Ausführungsbeispiel wird hierzu der Faltenbalg 72 des Kontaktierungsaktuators 62 durch die Druckluftquelle 82 aufgeblasen. Während des Absenkens nähert sich die Fahrzeugkontakteinheit 64 immer mehr an die Bodenkontakteinheit 12 an, sodass auch der Kontaktmagnet 104 im Zentrum der Fahrzeugkontakteinheit 64 in die Nähe der Bodenkontakteinheit 12 gelangt.

Sobald der Kontaktmagnet 104 in der Nähe einer der magnetischen Elemente 46 ist, ziehen sich das magnetische Element 46 und der Kontaktmagnet 104 an.

Hierdurch entsteht eine Kraft auf die Fahrzeugkontakteinheit 64 mit einer sehr großen Komponente in horizontaler Richtung, d. h. senkrecht zur Kontaktierungsrichtung R_{K}, die den Magnetbereich 102, genauer gesagt, den Kontaktmagneten 104 oberhalb eines magnetischen Elementes 46 ausrichtet.

Beim weiteren Absenken der Fahrzeugkontakteinheit 64 kommen die Kontaktelektroden 86, 90, 94 mit den Kontaktbereichen 22, 26, 30 in physikalischen Kontakt, wie in den Figuren 7a, 8a und 9a beispielhaft dargestellt ist, wobei die Kontaktelektroden 84 bzw. 86 länger sein können als die anderen Kontaktelektroden 88, 92 bzw. 90, 94, d.h. sich weiter vom Sockel 78 erstrecken, sodass die Kontaktelektroden 84 bzw. 86 beim Absenken als erstes mit der Bodenkontakteinheit 10 in Kontakt kommen.

Zum Beispiel sind die Kontaktstifte 96 der Kontaktelektroden 84 bzw. 86 länger ausgeführt die diejenigen der anderen Kontaktelektroden 88, 92 bzw. 90, 94.

Gut zu erkennen ist, dass der Kontaktmagnet 104 bzw. der Magnetbereich 102 mittig über dem magnetischen Element 46 eines Schutzkontaktbereiches 22 angeordnet ist.

Durch den nun sehr geringen Abstand zwischen dem magnetischen Element 46 und dem Kontaktmagneten 104 ist die Fahrzeugkontakteinheit 64 in horizontaler Richtung fixiert. Der Kontaktmagnet 104 und das magnetische Element 46 liegen nun vertikal übereinander und bilden die Drehachse D aus, d. h. dass eine Gerade durch das Zentrum des magnetischen Elementes 46 und durch das Zentrum des Kontaktmagneten 104 die Drehachse D bildet (Figur 4).

Durch die automatische Ausrichtung des Kontaktmagneten 104 zu einem der magnetischen Elemente 46 ist sichergestellt, dass die Drehachse D immer durch einen Schutzkontaktbereich 22 verläuft. Die Lage der Drehachse D im Hauptgitter G_{H} ist daher stets bekannt.

Jedoch bedeutet dies noch nicht, dass die übrigen Kontaktelektroden 86, 90, 94 mit den übrigen Kontaktbereichen 22, 26, 30 übereinstimmen. Vielmehr sind verschiedene Situationen denkbar, in denen die Fahrzeugkontakteinheit 64 gegenüber der Bodenkontakteinheit 12 verdreht ist. Drei verschiedene Situationen sind in den Figuren 7a, 8a, 9a dargestellt.

Figur 7a entspricht der gewünschten Situation, in der das Hauptgitter G_{H} mit dem Sockelgitter Gs in Deckung ist, und auch sämtliche Untergitter G_{U1}, G_{U2}, Gus mit den Anordnungen der Kontaktelektroden 86, 90, 94 am Sockel 78 übereinstimmen.

In dieser Position kontaktieren die Schutzkontaktelektroden 86 die Kontaktflächen der Schutzkontaktbereiche 22, die Neutralelektroden 90 kontaktieren die Kontaktflächen der Neutralkontaktbereiche 26 und die Phasenelektroden 94 kontaktieren die Kontaktflächen der Phasenkontaktbereiche 30 und bilden entsprechende Kontaktstellen.

In dieser Situation ist die Zuordnung der Kontaktstellen korrekt, d.h. dass nur Kontaktelektroden 86, 90, 94 mit Kontaktbereichen 22, 26, 30 gleichen Typs in Kontakt stehen, also z.B. eine Neutralelektrode 90 nicht mit einem Schutzkontaktbereich 22 oder einem Phasenkontaktbereich 30 in Kontakt steht.

In den Figuren 8a und 9a sind zwei Situationen dargestellt, in denen das Hauptgitter G_{H} und das Sockelgitter Gs nicht übereinander liegen, und damit keine korrekten Kontaktstellen oder korrekte Kontaktierung ausgebildet wird.

In der Situation der Figur 8a kontaktieren die Schutzkontaktelektroden 86 Kontaktflächen der Neutralkontaktbereiche 26 oder Phasenkontaktbereiche 30.

In Figur 9a kontaktieren die meisten Kontaktelektroden, insbesondere die Schutzkontaktelektroden 86 keine Kontaktflächen der Kontaktbereiche 22, 26, 30, sondern berühren die Isolationsabschnitte 49 zwischen den verschiedenen Kontaktbereichen 22, 26, 30.

Wie bereits erwähnt, ist, nachdem die Fahrzeugkontakteinheit 64 vollständig abgesenkt wurde, die genaue Stellung der Kontaktbereiche 22, 26, 30 zu den Kontaktelektroden 86, 90, 94 unbekannt.

Daher muss die korrekte Zuordnung der Kontaktbereiche 22, 26, 30 zu den Kontaktelektroden 86, 90, 94 überprüft werden. Dazu muss ermittelt werden, ob eine bestimmte Kontaktelektrode einen entsprechenden, zugeordneten Kontaktbereich kontaktiert.

In diesem Falle sind die bestimmten Kontaktbereiche und bestimmten Kontaktelektroden die Schutzkontaktbereiche 22 bzw. Schutzkontaktelektroden 86. Außerdem handelt es sich beispielsweise dabei um die außen, d. h. nicht im Magnetbereich 102 gelegenen Schutzkontaktelektroden 86.

In den Figuren 7b, 8b und 9b sind schematisch die Schaltpläne eines Stromkreises 120 gezeigt, der sich in den Situationen der Figuren 7a, 8a bzw. 9a ergibt.

Der gezeigte Stromkreis 120 setzt sich aus dem ersten Fahrzeug-Teilstromkreis 106 auf der rechten Seite und einem der verschiedenen Boden-Teilstromkreisen 50, 54, 58 zusammen bzw. ist nicht vollständig geschlossen (Fig. 9).

Im Detail weist der erste Fahrzeug-Teilstromkreis 106 jeweils einen Schwingkreis 118 auf, in dem die Signalquelle 112 und die Messeinheit 114 integriert sind.

Der Schwingkreis 118 wird dann über die Schutzkontaktelektroden 86 in Abhängigkeit der jeweiligen Situation durch den ersten Boden-Teilstromkreis 50, den zweiten Boden-Teilstromkreis 54 oder den dritten Boden-Teilstromkreis 58 erweitert oder bleibt im Falle von der Situation gemäß Figur 9 offen.

Denkbar ist jedoch auch, dass es keine vorbestimmen und separaten Boden-Teilstromkreise gibt, sodass der erste Boden-Teilstromkreis 50, der zweite Boden-Teilstromkreis 54 und der dritte Boden-Teilstromkreis 58 ein zusammenhängender Teilstromkreis sind, wobei sich die entsprechenden Boden-Teilstromkreise erst durch die Kontaktierung durch die Kontaktelektroden 86, 90, 94 ausbilden.

Anders ausgedrückt können alle Kontaktbereiche 22, 26, 30 miteinander elektrisch verbunden sein, z.B. weil sie alle von der Bodensteuereinheit 38 auf das Schutzleiterpotenzial geschaltet wurden. Wenn nun drei Kontaktbereiche 22, 26, 30 von den drei zur Überprüfung der Zuordnung verwendeten Schutzkontaktelektroden 86 kontaktiert werden, bilden diese kontaktierten drei Kontaktbereiche 22, 26, 30 den verwendeten Boden-Teilstromkreis. Der auf diese Weise gebildete Boden-Teilstromkreis ist der entweder ein erster Boden-Teilstromkreis 50, ein zweiter Boden-Teilstromkreis 54 oder ein dritter Boden-Teilstromkreis 58.

Zur Bestimmung der korrekten Zuordnung wird durch die Signalquelle 112 ein Hochfrequenzsignal im Schwingkreis 118 erzeugt.

Auf die Anregung durch das Hochfrequenzsignal hin ergibt sich eine Hochfrequenzantwort des erweiterten Schwingkreises 118, der nun den gesamten Stromkreis 120 aus dem ersten Fahrzeug-Teilstromkreis 106 und ggf. einem der Boden-Teilstromkreise 50, 54, 58 umfasst.

Die Messeinheit 114 ermittelt die Hochfrequenzantwort und übermittelt die Hochfrequenzantwort an die Steuereinheit 100.

Die Steuereinheit 100 vergleicht die Hochfrequenzantwort mit einer oder mehreren Referenzantworten und bestimmt, mit welcher Referenzantwort die größte Übereinstimmung besteht.

Die Referenzantworten können auch Bereiche sein. Die Referenzantworten sind beispielsweise empirisch ermittelte Hochfrequenzantworten, die in bekannten Stromkreisen aufgenommen und in einem Speicher der Steuereinheit 100 hinterlegt wurden. Für jede Referenzantwort ist somit ein bestimmter Stromkreis bekannt, sodass anhand der Referenzantwort auf den gebildeten Stromkreis 120 geschlossen werden kann.

Beispielsweise wird zur Zuordnung der Hochfrequenzantwort zu Referenzantworten auf bestimmte Charakteristika, wie der Dämpfung des Hochfrequenzsignales zurückgegriffen.

Im Falle der Situation nach Figur 7 weisen die elektrischen Leitungen 44 des ersten Boden-Teilstromkreises 50 aufgrund der Widerstandselemente 48 einen erhöhten Leitungswellenwiderstand auf, die in Figur 7 als Induktivitäten im ersten Boden-Teilstromkreis 50 dargestellt sind.

Die Hochfrequenzantwort ist somit stark gedämpft und stimmt mit einer Referenzantwort im Wesentlichen überein, die einem Stromkreis 120 aus dem ersten Fahrzeug-Teilstromkreis 106 und dem ersten Boden-Teilstromkreis 50 entspricht. Daher kann die Steuereinheit 100 bestimmen, dass ein Stromkreis 120 aus dem ersten Fahrzeug-Teilstromkreis 106 und dem ersten Boden-Teilstromkreis 50 zustande gekommen ist, was bedeutet, dass die Schutzkontaktelektroden 86 mit den Schutzkontaktbereichen 22 bzw. deren Kontaktflächen eine Kontaktstelle bilden. In diesem Fall wird eine korrekte Zuordnung angenommen.

Da die korrekte Zuordnung festgestellt wurde, kann die Bodensteuereinheit 38 den Ladevorgang beginnen. Hierzu hebt die Bodensteuereinheit 38 der Bodenkontakteinheit 12 die Erdung auf und verbindet die Neutralkontaktbereiche 26 und die Phasenkontaktbereiche 30 mit dem Neutralleiter N bzw. der Phase L mit den entsprechenden Stromanschlüssen 40. Dabei werden nur solche Neutralkontaktbereiche 26 und Phasenkontaktbereiche 30 bestromt, die mit einer Kontaktelektrode 90 bzw. 94 in Kontakt stehen.

Gleichermaßen kann durch die Steuereinheit 100 der Fahrzeugkontakteinheit 64 die Neutralelektrode 90 und die Phasenelektrode 94 mit dem Neutralleiter N und der Phase P des Bordnetzes des Fahrzeugs 10 verbunden werden.

Somit wird das Bordnetz des Fahrzeugs 10 in das örtliche Stromnetz der Ladeinfrastruktur integriert und das Fahrzeug 10 kann nun geladen werden. Die konduktive Verbindung wurde somit automatisch, also ohne Zutun einer Person hergestellt.

Während des Ladens können jedoch unvorhergesehene Situationen eintreten, die zumindest einen sofortigen Abbruch des Ladens nötig machen. Zum Beispiel kann bei einem Auffahrunfall, d.h. wenn ein anderes Fahrzeug auf das ladende Fahrzeug 10 auffährt, das Fahrzeug 10 verschoben und die Fahrzeugkontakteinheit 64 von der Bodenkontakteinheit 12 unplanmäßig gelöst werden.

Um solche Situationen zu erkennen wird der physische Kontakt zwischen den Kontaktelektroden 86, 90, 94 und den Kontaktflächen kontinuierlich oder in regelmäßigen Abständen mithilfe der Signalquelle 112 und der Messeinheit 114 wie oben beschrieben überprüft.

Wenn festgestellt wird, dass der Kontakt unterbrochen wurde, wird eine Notfunktion aktiviert, die wenigstens das sofortige Abschalten des Ladestroms umfassen kann.

In den Situationen der Figuren 8 und 9 kann nicht sofort nach dem Absenken mit dem Laden begonnen werden.

Der Stromkreis 120 der Situation nach Figur 8 enthält einerseits den ersten Fahrzeug-Teilstromkreis 106 und andererseits den zweiten Boden-Teilstromkreis 54 oder den dritten Boden-Teilstromkreis 58 in Abhängigkeit davon, ob die in Figur 8a mit dem Bezugszeichen 86.1 bezeichneten Schutzkontaktelektroden 86 oder die mit dem Bezugszeichen 86.2 bezeichneten Schutzkontaktelektroden 86 Teil des ersten Fahrzeug-Teilstromkreises 106 sind.

Da im zweiten Boden-Teilstromkreis 54 bzw. dritten Boden-Teilstromkreis 58 keine Widerstandselemente 48 an den elektrischen Leitungen 44 vorgesehen sind, ist der Leitungswellenwiderstand der zweiten bzw. dritten Boden-Teilstromkreise 54, 58 gegenüber dem ersten Boden-Teilstromkreis 50 stark verringert.

Dies wirkt sich selbstverständlich auf den Stromkreis 120 bzw. den Schwingkreis 118 aus, sodass die von der Messeinheit 114 gemessene Hochfrequenzantwort auf die Anregung durch die Signalquelle 112 mit dem Hochfrequenzsignal anders ausfällt. Insbesondere wird das Hochfrequenzsignal nun nicht so stark gedämpft.

Anhand des Vergleichs der Hochfrequenzantwort mit den Referenzantworten stellt die Steuereinheit 100 fest, dass die erhaltene Hochfrequenzantwort einer Referenzantwort gleicht, die einem Stromkreis 120 aus dem ersten Fahrzeug-Teilstromkreis 106 und dem zweiten Boden-Teilstromkreis 54 bzw. dem dritten Boden-Teilstromkreis 58 zugeordnet ist.

Daraus kann die Steuereinheit 100 ermitteln, dass die Schutzkontaktelektroden 86 mit den Kontaktflächen der Neutralkontaktbereiche 26 bzw. der Phasenkontaktbereiche 30 Kontaktstellen bilden. In diesem Falle hat die Steuereinheit 100 nun bestimmt, dass eine Situation nach Figur 8a vorliegt. Die Steuereinheit 100 weiß daher, dass die Fahrzeugkontakteinheit 64 gegenüber der Bodenkontakteinheit 12 um einen Winkel von 30° im Uhrzeigersinn verdreht werden muss, um eine korrekte Zuordnung zu erreichen.

Die Steuereinheit 100 steuert daraufhin den Ausrichtungsaktuator 60 bzw. den Elektromotor 66 derart an, dass die Fahrzeugkontakteinheit 64, genauer gesagt der Sockel 78, um 30° um die Drehachse D, d. h. um den Magnetbereich 102 verdreht wird. Auf diese Weise wird die Situation der Figur 7a erreicht.

Beim Verdrehen wird der Sockel 78 entlang der Bodenkontakteinheit 12 verdreht, insbesondere ohne den Sockel 78 anzuheben und die Kontaktelektroden 84, 88, 92 bzw. 86, 90, 94 von den Kontaktflächen abzuheben.

Nach abgeschlossener Drehung oder noch bei der Drehung kann eine erneute Prüfung durch Einspeisung eines Hochfrequenzsignals in den ersten Fahrzeug-Teilstromkreis 106 erfolgen. Diese Messung führt zu dem zuvor zu Figur 7b beschriebenen Ergebnis. Die Steuereinheit 100 kann dann mit dem Laden beginnen.

In der Situation nach Figur 9 wird keine elektrische Verbindung zwischen dem ersten Fahrzeug-Teilstromkreis 106 und einem anderen Boden-Teilstromkreis 50, 54, 58 erzeugt, sodass kein vollständiger Stromkreis 120 wie in den Figuren 7 und 8 gebildet wird.

Trotzdem erzeugt ein in den Schwingkreis 118 eingespeistes Hochfrequenzsignal eine Hochfrequenzantwort, die mit der Messeinheit 114 detektiert werden kann.

Auch zu dieser Situation wurde eine Referenzantwort in der Steuereinheit 100 hinterlegt, sodass die Steuereinheit auch diese Situation erkennen kann. In dieser Situation veranlasst die Steuereinheit 100 eine Drehung der Fahrzeugkontakteinheit 64 um die Drehachse D und misst in regelmäßigen Abständen, z. B. nach einem bestimmten Drehwinkel erneut die Zuordnung der Kontaktstellen, wenn sie entweder zur Situation nach Figur 8a oder zur Situation nach Figur 7a gelangt, die von ihrer Position her identifizierbar sind.

Denkbar ist selbstverständlich auch, dass die Signalquelle 112 und die Messeinheit 114 in der Bodenkontakteinheit 12 vorgesehen sind. In diesem Falle wird das Hochfrequenzsignal in einem der Boden-Teilstromkreise 50, 54, 58 erzeugt und durch die Messeinheit 114 gemessen. Das Prinzip der Messung ändert sich hierdurch nicht.

Selbstverständlich können sowohl in der Fahrzeugkontakteinheit 64 als auch in der Bodenkontakteinheit 12 je eine Signalquelle 112 und je eine Messeinheit 114 vorgesehen sein, wodurch sowohl durch das Fahrzeug 10 als auch durch die Bodenkontakteinheit 12 die korrekte Zuordnung und eine ordnungsgemäße Kontaktierung bestimmt werden kann. Hierdurch wird die Betriebssicherheit des Fahrzeugkoppelsystems 15 erhöht.

In den weiteren Figuren sind weitere Ausführungsformen der Fahrzeugverbindungsvorrichtung 14 und der Bodenkontakteinheit 12, also auch des Fahrzeugkoppelsystems 15 gezeigt, die im Wesentlichen der ersten Ausführungsform entsprechen. Im Folgenden wird daher lediglich auf die Unterschiede eingegangen und gleiche und funktionsgleiche Teile sind mit denselben Bezugszeichen versehen.

In Figur 10 ist ein Schaltplan eines Teils einer zweiten Ausführungsform des Fahrzeugkoppelsystems 15 dargestellt. Diese zweite Ausführungsform kann insbesondere mit der ersten Ausführungsform kombiniert werden bzw. diese ergänzen.

In dieser Ausführungsform weist die Bodenkontakteinheit 12 eine Signalquelle 122 und wenigstens eine Messeinheit 124 auf.

Im gezeigten Ausführungsbeispiel sind drei Neutralkontaktbereiche 26 mit je einer Messeinheit 124 dargestellt. Zum Beispiel ist jedem Neutralkontaktbereich 26 eine Messeinheit 124 zugeordnet, also mit dieser elektrisch verbunden.

Mittels der Signalquelle 122 und den Messeinheiten 124 kann ermittelt werden, welche Neutralkontaktbereiche 26 in Kontakt mit Neutralelektroden 90 stehen. Dies wird vorzugweise ermittelt, nachdem festgestellt wurde, dass die Zuordnung an den Kontaktstellen korrekt ist.

Beispielsweise sind, um die kontaktierten Neutralkontaktbereiche 26 zu bestimmen, in der Fahrzeugkontakteinheit 64 die Neutralelektroden 90 und die Schutzkontaktelektroden 86 durch die Steuereinheit 100 der Fahrzeugverbindungsvorrichtung 14 elektrisch miteinander verbunden.

Die Neutralkontaktelektroden 90 können, wie in Figur 10 zu erkennen, auch untereinander permanent elektrisch verbunden sein.

Die Signalquelle 122 kann mit einem oder mehreren der Neutralkontaktbereiche 26, deren Kontaktierung bestimmt werden soll, durch eine Schaltvorrichtung 140, insbesondere ein Relais oder Multiplexer, elektrisch verbunden werden. Diese zu messenden Neutralkontaktbereiche 26 sind somit im Fall einer Kontaktierung Teil eines weiteren Stromkreises 142.

Nun wird durch die Signalquelle 122 der Bodenkontakteinheit 12 ein Hochfrequenzsignal erzeugt und über die Neutralkontaktbereiche 26 und Neutralelektroden 90 zur Fahrzeugkontakteinheit 64 übertragen.

Falls die zu messenden Neutralkontaktbereiche 26 eine Neutralelektrode 90 kontaktieren wird das Hochfrequenzsignal wieder in die Bodenkontakteinheit 12 übertragen und kann dann von einer der Messeinheiten 124 erfasst werden.

Falls die zu messenden Neutralkontaktbereiche 26 keine Neutralelektrode 90 kontaktiert, bleibt der Schwingkreis unterbrochen und es kann kein Hochfrequenzsignal an der Messeinheit 124 erfasst werden.

Die Bodensteuereinheit 38 der Bodenkontakteinheit 12 kann somit anhand der Messergebnisse der Messeinheiten 124 und der Stellung der Schaltvorrichtung 140 bestimmen, welche Neutralkontaktbereiche 26 mit Neutralelektroden 90 in Kontakt stehen.

Die Figuren 14a, 14b, 14c und 14d zeigen das Vorgehen zur Ermittlung der kontaktierten Neutralkontaktbereiche 26 und damit das Vorgehen zur Ermittlung der Position der Fahrzeugkontakteinheit 64 detaillierter im Fall, dass die Neutralelektroden 90 im Sockel 78 miteinander elektrisch verbunden sind.

In Figur 14a ist lediglich der zweite Boden-Teilstromkreis 54 und der zweite Fahrzeug-Teilstromkreis 108 dargestellt, die Teil des verwendeten Stromkreises 142 sind. Zur Vereinfachung ist dargestellt, das ein Kontakt der Signalquelle 122 geerdet ist, da dies der Funktion des Aufbaus entspricht.

Es sind vier Neutralkontaktbereiche 26 gezeigt, von denen drei durch die Neutralelektroden 90 der Fahrzeugkontakteinheit 64 kontaktiert sind.

Das Schaltelement 140 ist durch Schalter illustriert, die je einen Neutralkontaktbereich 26 mit der Signalquelle 122 oder der Erde verbinden können.

Zu Beginn wird jeweils nur ein Neutralkontaktbereich 26 mittels des zugeordneten Schalters mit der Signalquelle 122 verbunden und das Signal im Stromkreis 142 mittels der Messeinheiten 124 gemessen.

In der Figur 14a gezeigten Situation wurde ein Neutralkontaktbereich 26 mit der Signalquelle 122 verbunden, der nicht kontaktiert ist. Es besteht daher keine Verbindung zur Erde, sodass die Signalquelle 122 kein Hochfrequenzsignal im Stromkreis 142 erzeugen kann. Keine der Messeinheiten 124 detektiert ein Hochfrequenzsignal, wodurch festgestellt wird, dass der mit der Signalquelle 122 verbundene Neutralkontaktbereich 26 nicht kontaktiert ist. Daraufhin wird die Verbindung zur Signalquelle 122 durch das Schaltelement 140 getrennt und ein anderer Neutralkontaktbereich 26 mit der Signalquelle 122 verbunden, wie in Figur 14b zu sehen ist.

In der Situation nach Figur 14b ist der mit der Signalquelle 122 verbundene Neutralkontaktbereich 26 durch eine Neutralelektrode 90 kontaktiert, d.h. der zweite Fahrzeug-Teilstromkreis 108 ist mit dem zweiten Boden-Teilstromkreis 54 verbunden.

Aufgrund der elektrischen Verbindung der Neutralelektrode 90 mit den anderen Neutralelektroden 90 durch den zweiten Fahrzeug-Teilstromkreis 108 besteht nun auch eine elektrische Verbindung zu den weiteren kontaktierten Neutralkontaktbereichen 26, die durch das Schaltelement 140 geerdet sind. Auf diese Weise wird die notwendige Erdung bereitgestellt, sodass durch die Signalquelle 122 ein Hochfrequenzsignal im Stromkreis 142 erzeugt wird, dass von der entsprechenden Messeinheit 124 detektiert wird. Dadurch wird festgestellt, dass der entsprechende Neutralkontaktbereich 26 kontaktiert ist.

Im nächsten Schritt wird dann ein weiterer Neutralkontaktbereich 26 durch das Schaltelement 140 mit der Signalquelle 122 verbunden (vgl. Fig. 14c). Dieser Neutralkontaktbereich 26 ist so gewählt, dass er sich in der Umgebung des kontaktierten Neutralkontaktbereichs 26 befindet. Ist auch dieser Neutralkontaktbereich 26 kontaktiert wird das Hochfrequenzsignal auch von der zugehörigen Messeinheit 124 detektiert, wodurch die Kontaktierung festgestellt wird.

Sobald zwei Neutralkontaktbereich 26 als kontaktiert bekannt sind, gibt es nur zwei Möglichkeiten, welcher der Neutralkontaktbereich 26 der fehlende dritte Neutralkontaktbereich 26 ist.

Anschließend wird einer dieser beiden Neutralkontaktbereiche 26 durch das Schaltelement 140 mit der Signalquelle 122 verbunden (vgl. Fig. 14d). Wie zuvor beschrieben wird dann mittels der zugeordneten Messeinheit 124 ermittelt, ob auch dieser Neutralkontaktbereich 26 kontaktiert ist.

Ist dies der kontaktierte Neutralkontaktbereich 26 ist die Ermittlung der Position des Sockels 78 bzw. der Fahrzeugkontakteinheit 64 relativ zur Bodenkontakteinheit 12 erfolgreich abgeschlossen und die Position ist nun bekannt. Aus der Position kann direkt auf die kontaktierten Phasenkontaktbereiche 30 geschlossen werden.

Analog kann ermittelt werden, welche der Phasenkontaktbereiche 30 mit den Phasenelektroden 94 in Kontakt stehen.

Auch mittels dieses Verfahrens kann überprüft werden, ob der Kontakt zwischen den Kontaktelektroden 86, 90, 94 und den Kontaktflächen während des Ladens unterbrochen wurde, um ggf. eine Notfunktion aktivieren zu können.

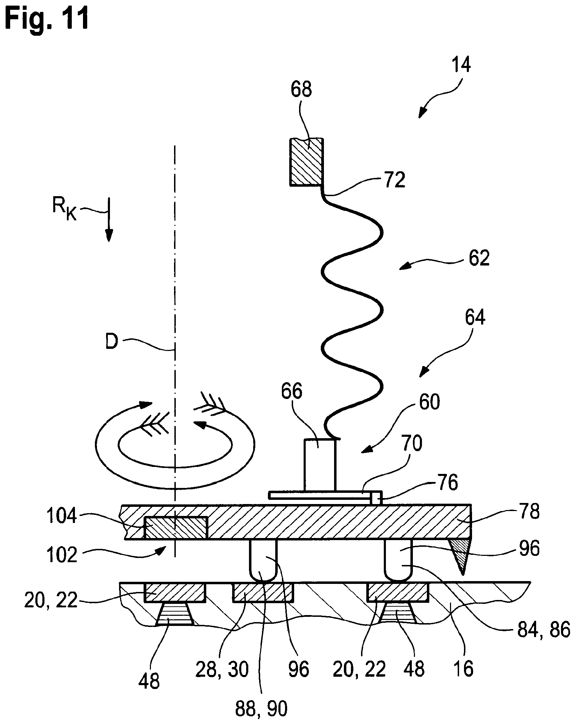

Figur 11 ähnelt der Figur 4 und zeigt eine dritte Ausführungsform der Fahrzeugverbindungsvorrichtung 14. Der Unterschied zur ersten Ausführungsform liegt in der Anordnung des Ausrichtungsaktuators 60.

In dieser zweiten Ausführungsform ist der Ausrichtungsaktuator 60 zwischen der Fahrzeugkontakteinheit 64 und dem Kontaktierungsaktuator 62 vorgesehen.

Hierzu weist der Sockel 78 die Verzahnung 76 auf, in die das Zahnrad 70 des Ausrichtungsaktuators 60 eingreift. Das Zahnrad 70 ist mit dem Elektromotor 66 gekoppelt, der am Sockelende des Kontaktierungsaktuators 62 drehfest verbunden ist.

Der Sockel 78 und damit die ganze Fahrzeugkontakteinheit 64 sind über nicht gezeigte Lager drehbar am Kontaktierungsaktuator 62 befestigt.

Der Kontaktierungsaktuator 62 ist an seinem fahrzeugseitigen Ende an dem Montageabschnitt 68 drehfest angebracht. Denkbar ist jedoch auch, dass er direkt am Fahrzeug 10 befestigt ist.

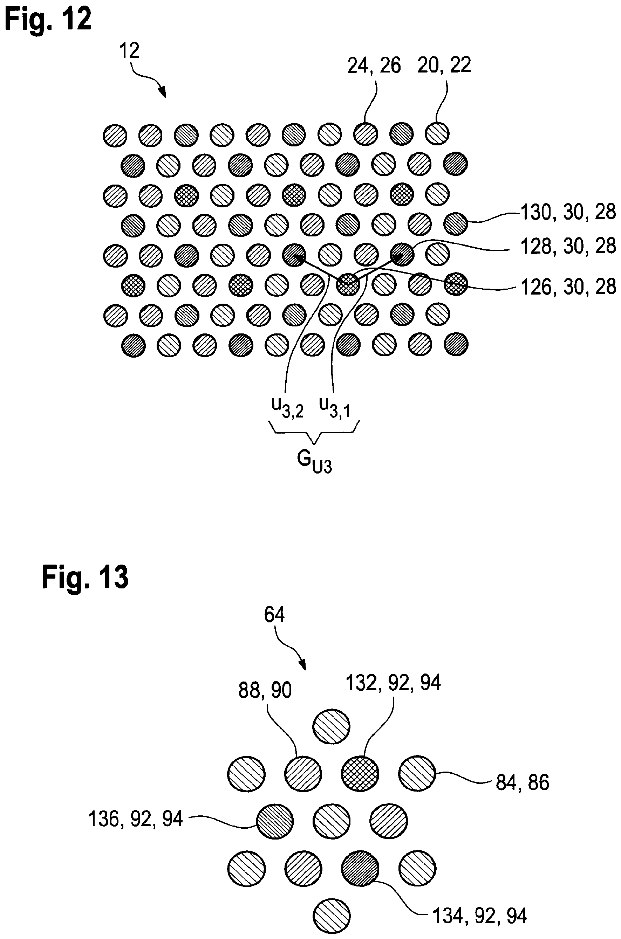

In den Figuren 12 und 13 sind ähnlich den Figuren 3 und 6 die Kontaktbereiche 22, 26, 30 bzw. die Kontaktelektroden 86, 90, 94 in ihrer Anordnung in den entsprechenden Gittern dargestellt.

Im Unterschied zur ersten Ausführungsform ist nicht nur eine Art von Phasenkontaktbereichen 30 bzw. Phasenelektroden 94 vorgesehen, sondern jeweils drei verschiedene, um einen Dreiphasenwechselstrom übertragen zu können. Dementsprechend ist das örtliche Stromnetz ein Dreiphasenwechselstromnetz und die Bodenkontakteinheit 12 weist drei verschiedene Stromanschlüsse 40 für die Phasen bzw. Außenleiter auf.

Die Bodenkontakteinheit 12 weist somit mehrere L1-Kontaktbereiche 126, mehrere L2-Kontaktbereiche 128 und mehrere L3-Kontaktbereiche 130 auf.

Die L1-Kontaktbereiche 126, die L2-Kontaktbereiche 128 und die L3-Kontaktbereiche 130 bilden die Phasenkontaktbereiche 30.

Die L1-, L2- und L3-Kontaktbereiche 126, 128 und 130 sind somit an den Gitterpunkten des dritten Untergitters G_{U3} vorgesehen, wobei sie in Richtung wenigstens einer der Basisvektoren des dritten Untergitters G_{U3} reihum im Wechsel vorgesehen sind.

In anderen Worten gibt es kein Paar nächster Nachbarn im dritten Untergitter G_{U3}, das aus den gleichen Kontaktbereichen der L1-Kontaktbereiche 126, der L2-Kontaktbereiche 128 und L3-Kontaktbereiche 130 besteht. Zum Beispiel sind die nächsten Nachbarn eines L1-Kontaktbereiches 126 je drei L2-Kontaktbereiche 128 und drei L3-Kontaktbereiche 130.

Bezüglich der elektrischen Verbindungen sind die L1-Kontaktbereiche 126, die L2-Kontaktbereiche 128 und die L3-Kontaktbereiche 130 mit jeweils einem der Außenleiter des örtlichen Stromnetzes verbunden. Zur Überprüfung der Kontaktierung können sie jedoch alle gemeinsam den dritten Boden-Teilstromkreis 58 bilden.

In ähnlicher Weise weist die Fahrzeugkontakteinheit 64 eine L1-Phasenelektrode 132, eine L2-Phasenelektrode 134 und eine L3-Phasenelektrode 136 auf, die zusammen die Phasenelektroden 94 bilden.

Im in Figur 12 gezeigten Beispiel ist je eine L1-, eine L2- und eine L3-Phasenelektrode 132, 134 und 136 vorhanden, die jeweils in Bezug auf die erste Ausführungsform eine der Phasenelektroden 94 bilden.

Die L1-, die L2- und die L3-Phasenelektrode 132, 134, 136 sind mit je einem der Außenleiter des Bordnetzes des Fahrzeugs 10 elektrisch verbunden oder durch die Steuereinheit gemeinsam zum dritten Fahrzeug-Teilstromkreis 110 verbunden.

Die Anordnung bzw. Reihenfolge der L1-, L2- und L3-Kontaktbereiche 126, 128 und 130 im dritten Untergitter Gus entspricht der Reihenfolge der L1-, L2- und L3-Phasenelektrode 132, 134 und 136 im Kontaktierungsbereich 80. Somit kontaktieren die L1-, L2- und L3-Kontaktbereiche 126, 128 und 130 die L1-, L2-bzw. L3-Phasenelektroden 132, 134 bzw. 136 bei korrekter Ausrichtung der Fahrzeugkontakteinheit 64 zur Bodenkontakteinheit 12 analog zu Figur 7a.

Auch wenn die Bodenkontakteinheit 12, wie beschrieben, die L1-, L2- und L3-Kontaktbereiche 126, 128 und 130 aufweist - also zum Laden des Fahrzeugs 10 mit Drehstrom bzw. Dreiphasenwechselstrom ausgelegt ist - ist es trotzdem möglich, dass ein Fahrzeug 10, das nur zum Laden mit einphasigem Wechselstrom eingerichtet ist, - also lediglich über gleiche Phasenelektroden 94 verfügt - über diese Bodenkontakteinheit 12 geladen wird.

Hierzu wird die Fahrzeugkontakteinheit 64 wie zuvor beschrieben mit der Bodenkontakteinheit 10 in Kontakt gebracht. Anschließen wird jedoch nur eine der Phasenelektroden 94 mit dem Außenleiter des Bordnetzes des Fahrzeugs 10 elektrisch verbunden und zum Laden verwendet.

Die übrigen beiden Phasenelektroden 94 sind zum Beispiel fahrzeugseitig nicht verbunden und/oder die Phasenelektroden 132, 134, 136, die nicht zum Laden verwendet werden, sind potentialfrei geschaltet bzw. mit dem Schutzleiter verbunden.

Es sind auch Anordnungen vorstellbar, bei denen die L1-, L2- und L3-Kontaktbereiche 126, 128, 130 bzw. die L1-, L2- bzw. L3-Phasenelektroden 132, 134, 136 auch anstelle der Neutralkontaktbereiche 26 bzw. der Neutralelektroden 88 vorgesehen sind, sodass jeweils zwei L1-, L2- und L3-Phasenelektroden 132, 134, 136 an der Fahrzeugkontakteinheit 64 vorhanden sind. Dadurch kann der Leitungsquerschnitt für jede der Phasen erhöht werden, sodass größere Ladeströme möglich sind.

Auch ist es denkbar, dass in der Fahrzeugkontakteinheit 64 die Signalquelle 112 und in der Bodenkontakteinheit 12 die Messeinheit 124 vorgesehen ist oder umgekehrt. Auch auf diese Weise lässt sich die korrekte Zuordnung wie oben beschrieben bestimmen.

Außerdem können in diesem Fall Daten von der Signalquelle 112 an die Messeinheit 124 mittels des Hochfrequenzsignals übermittelt werden. Dadurch ist ein unidirektionaler Datenfluss von der Fahrzeugkontakteinheit 64 zur Bodenkontakteinheit 12 oder umgekehrt möglich.

Falls sowohl die Fahrzeugkontakteinheit 64 als auch die Bodenkontakteinheit 12 die Signalquelle 112, 122 und die Messeinheit 114, 124 aufweisen, ist ein bidirektionaler Datenaustausch zwischen der Fahrzeugkontakteinheit 64 und der Bodenkontakteinheit 12, also zwischen dem Fahrzeug 10 und dem übrigen Ladesystem möglich.

Zur Datenübertragung können die gleichen Kontaktstellen wie zur Stromübertragung verwendet werden und die Datenübertragung ist auch während eines Ladevorgangs möglich, da die Hochfrequenzsignale auf den Ladestrom aufmoduliert werden können.

Selbstverständlich lassen sich die Merkmale der einzelnen Ausführungsformen beliebig miteinander kombinieren. Die Erfindung ist durch die nachfolgenden Ansprüche definiert.

## Patentansprüche

1. Fahrzeugverbindungsvorrichtung für ein Fahrzeugbatterieladesystem zur automatischen, konduktiven Verbindung einer Fahrzeugkontakteinheit (64) mit einer Bodenkontakteinheit (12), mit
der Fahrzeugkontakteinheit (64), die einen Sockel (78) mit einem Kontaktierungsbereich (80) aufweist, in dem wenigstens eine erste Kontaktelektrode (84), wenigstens eine zweite Kontaktelektrode (88) und wenigstens eine dritte Kontaktelektrode (92) vorgesehen sind, wobei die Fahrzeugkontakteinheit (64) in eine Kontaktierungsrichtung (R_{K}) zur Bodenkontakteinheit (12) hin bewegbar ist, um die wenigstens eine erste Kontaktelektrode (84), die wenigstens eine zweite Kontaktelektrode (88) und die wenigstens eine dritte Kontaktelektrode (92) mit der Bodenkontakteinheit (12) in Berührung zu bringen,
**gekennzeichnet durch** einen
Ausrichtungsaktuator (60), der derart mit dem Sockel (78) verbunden ist, dass er den Sockel (78) um eine Drehachse (D), die im Wesentlichen in die Kontaktierungsrichtung (R_{K}) verläuft, verdrehen kann.

2. Fahrzeugverbindungsvorrichtung nach Anspruch 1, **dadurch gekennzeichnet, dass** die wenigstens eine erste Kontaktelektrode (84) wenigstens eine Schutzkontaktelektrode (86) ist, die wenigstens eine zweite Kontaktelektrode (88) wenigstens eine Neutralelektrode (90) oder wenigstens eine positive Gleichstromelektrode ist und/oder die wenigstens eine dritte Kontaktelektrode (92) wenigstens eine Phasenelektrode (94) oder wenigstens eine negative Gleichstromelektrode ist.

3. Fahrzeugverbindungsvorrichtung nach einem der vorhergehenden Ansprüche, **dadurch gekennzeichnet, dass** die wenigstens eine erste Kontaktelektrode (84), die wenigstens eine zweite Kontaktelektrode (88) und die wenigstens eine dritte Kontaktelektrode (92) zusammen an der Kontaktseite des Sockels (78) auf den Gitterpunkten eines Sockelgitters (Gs) in Form eines 2-dimensionalen Bravais-Gitters angeordnet sind.

4. Fahrzeugverbindungsvorrichtung nach einem der vorhergehenden Ansprüche, **dadurch gekennzeichnet, dass** im Kontaktierungsbereich (80), insbesondere am Mittelpunkt des Kontaktierungsbereiches (80) ein Magnetbereich (102) vorgesehen ist, in dem im oder am Sockel (78) ein Kontaktmagnet (104) angeordnet ist, wobei der Kontaktmagnet (104) die Position der Drehachse (D) bestimmt,
insbesondere wobei eine der wenigstens einen ersten Kontaktelektrode (84), der wenigstens einen zweiten Kontaktelektrode (88) und der wenigstens einen dritten Kontaktelektrode (92), insbesondere eine erste Kontaktelektrode (84) im Magnetbereich (102) angeordnet ist und dass der Kontaktmagnet (104) der im Magnetbereich (102) angeordneten Kontaktelektrode (84, 88, 92) zugeordnet ist.

5. Fahrzeugverbindungsvorrichtung nach Anspruch 4, **dadurch gekennzeichnet, dass** der Magnetbereich (102) auf einem Gitterpunkt des Sockelgitters (Gs) liegt, wobei auf den nächst benachbarten Gitterpunkten Kontaktelektroden (84, 88, 92) vorgesehen sind,
insbesondere wobei auf den übernächst zum Magnetbereich (102) benachbarten Gitterpunkten Kontaktelektroden (84, 88, 92) vorgesehen sind, insbesondere erste Kontaktelektroden (84).

6. Fahrzeugverbindungsvorrichtung nach einem der vorhergehenden Ansprüche, **dadurch gekennzeichnet, dass** zur Übertragung von Drehstrom wenigstens drei zweite Kontaktelektroden (88) und/oder wenigstens drei dritte Kontaktelektroden (92) vorgesehen sind, wobei wenigstens eine der wenigstens drei zweiten und/oder dritten Kontaktelektroden (88, 92) eine L1-Phasenelektroden (132), wenigstens eine andere der wenigstens drei zweiten und/oder dritten Kontaktelektroden (88, 92) eine L2-Phasenelektrode (134) und wenigstens eine weitere der wenigstens drei zweiten und/oder dritten Kontaktelektroden (88, 92) eine L3-Phasenelektrode (136) ist.

7. Fahrzeugverbindungsvorrichtung nach einem der vorhergehenden Ansprüche, **dadurch gekennzeichnet, dass** der Ausrichtungsaktuator (60) einen Elektromotor (66) umfasst, dessen Ausgangswelle mit der Fahrzeugkontakteinheit (64) zur Drehmomentübertragung verbunden ist.

8. Bodenkontakteinheit für ein Fahrzeugbatterieladesystem zur automatischen, konduktiven Verbindung der Bodenkontakteinheit (12) und einer Fahrzeugkontakteinheit (64), mit einem plattenförmigen Grundkörper (16) sowie ersten Kontaktbereichen (20), zweiten Kontaktbereichen (24) und dritten Kontaktbereichen (28), wobei die Kontaktbereiche (20, 24, 28) voneinander unterschiedlich sind,
die auf einer Zielfläche (18) des Grundkörpers (16) in einem Hauptgitter (G_{H}) in Form eines 2-dimensionalen Bravais-Gitters angeordnet sind,
wobei die ersten Kontaktbereiche (20) in einem ersten Untergitter (G_{U1}) in Form eines 2-dimensionalen Bravais-Gitters, die zweiten Kontaktbereiche (24) in einem zweiten Untergitter (G_{U2}) in Form eines 2-dimensionalen Bravais-Gitters und die dritten Kontaktbereiche (28) in einem dritten Untergitter (Gus) in Form eines 2-dimensionalen Bravais-Gitters angeordnet sind,
wobei das erste Untergitter (G_{U1}), das zweite Untergitter (G_{U2}) und das dritte Untergitter (Gus) ineinander verschachtelt sind,
wobei in Richtung zumindest einer der Basisvektoren (h₁, h₂) des Hauptgitters (G_{H}) die ersten Kontaktbereiche (20), die zweiten Kontaktbereiche (24) und die dritten Kontaktbereiche (28) im Wechsel auftreten.

9. Bodenkontakteinheit nach Anspruch 8, **dadurch gekennzeichnet, dass** die Bodenkontakteinheit (12) eine Bodensteuereinheit (38) sowie einen ersten Bodenanschluss (40.1), einen zweiten Bodenanschluss (40.2) und einen dritten Bodenanschluss (40.3) zum bodenseitigen Anschließen der Bodenkontakteinheit (12) aufweist,
wobei die ersten Kontaktbereiche (20) mit dem ersten Bodenanschluss (40.1) elektrisch verbunden sind,
und wobei die Bodensteuereinheit (38) dazu eingerichtet ist, die zweiten Kontaktbereiche (24) zwischen wenigstens zwei des ersten Bodenanschlusses (40.1), des zweiten Bodenanschlusses (40.2) und einer Erdung zur elektrischen Verbindung zu schalten und/oder die dritten Kontaktbereiche (28) zwischen wenigstens zwei des ersten Bodenanschlusses (40.1), des dritten Bodenanschlusses (40.3) und einer Erdung zur elektrischen Verbindung zu schalten.

10. Bodenkontakteinheit nach Anspruch 8 oder 9, **dadurch gekennzeichnet, dass** die ersten Kontaktbereiche (20) Schutzkontaktbereiche (22) sind, die zweiten Kontaktbereiche (24) Neutralkontaktbereiche (26) oder positive Gleichstromkontaktbereiche sind und/oder die dritten Kontaktbereiche (28) Phasenkontaktbereiche (30) oder negative Gleichstromkontaktbereiche sind, und/oder
dass wenigstens zwei der drei Untergitter (G_{U1}, G_{U2}, G_{U3}) identische Gitter und/oder wenigstens zwei von dem Hauptgitter (G_{H}) und den drei Untergittern (G_{U1}, G_{U2}, G_{U3}) vom gleichen Typ sind, insbesondere dass das Hauptgitter (G_{H}), das erste Untergitter (G_{U1}), das zweite Untergitter (G_{U2}) und/oder das dritte Untergitter (Gus) hexagonale Gitter sind.

11. Bodenkontakteinheit nach einem der Ansprüche 8 bis 10, **dadurch gekennzeichnet, dass** zur Übertragung eines Drehstroms wenigstens drei zweite Kontaktbereiche (26) und/oder wenigstens drei dritte Kontaktbereiche (28) vorgesehen sind, wobei wenigstens einer der wenigstens drei zweiten und/oder dritten Kontaktbereiche (26, 28) ein L1-Kontaktbereich (126), wenigstens ein anderer der wenigstens drei zweiten und/oder dritten Kontaktbereiche (26, 28) ein L2-Kontaktbereich (128) und wenigstens eine weiterer der wenigstens drei zweiten und/oder dritten Kontaktbereiche (26, 28) ein L3-Kontaktbereich (130) ist,
wobei der wenigstens eine L1-Kontaktbereich (126), der wenigstens eine L2-Kontaktbereich (128) und der wenigstens eine L3-Kontaktbereich (130) in Richtung zumindest einer der Basisvektoren (u_{3,1}, u_{3,2}) des dritten Untergitters (Gus) im Wechsel auftreten.

12. Bodenkontakteinheit nach einem der Ansprüche 8 bis 11, **dadurch gekennzeichnet, dass** in den ersten Kontaktbereichen (20), den zweiten Kontaktbereichen (24) und/oder den dritten Kontaktbereichen (28) im oder am Grundkörper (16) magnetische, insbesondere ferromagnetische Elemente (46) vorgesehen sind,
insbesondere wobei die magnetischen Elemente (46) jeweils eine elektrische Leitung (44) umgeben, die den entsprechenden Kontaktbereich (20, 24, 28) elektrisch kontaktiert.

13. Automatisches Fahrzeugkoppelsystem mit einer Fahrzeugverbindungsvorrichtung (14) nach einem der Ansprüche 1 bis 7 und einer Bodenkontakteinheit (12) nach einem der Ansprüche 8 bis 12,
wobei das Sockelgitter (Gs) und das Hauptgitter (G_{H}) einander im Wesentlichen entsprechen und/oder dass der Ausrichtungsaktuator (60) derart mit dem Sockel (78) verbunden ist, dass er den Sockel (78) entlang der Bodenkontakteinheit (12), insbesondere bei bestehendem Kontakt zwischen den Kontaktelektroden (84, 88, 92) und den Kontaktflächen verdrehen kann.

14. Automatisches Fahrzeugkoppelsystem nach Anspruch 13, **dadurch gekennzeichnet, dass** die Fahrzeugverbindungsvorrichtung (14) zumindest nach Anspruch 4 ausgebildet ist und die Bodenkontakteinheit (12) zumindest nach Anspruch 12 ausgebildet ist, wobei die magnetischen Elemente (46) der Fahrzeugkontakteinheit (64) mit dem Kontaktmagneten (104) zusammenwirken, um die Fahrzeugkontakteinheit (64) an der Bodenkontakteinheit (12) zu fixieren und um die Drehachse (D) auszubilden.

15. Verfahren zur automatischen, konduktiven Verbindung einer Fahrzeugkontakteinheit (64) mit einer Bodenkontakteinheit (12) eines automatischen Fahrzeugkoppelsystems (15) nach Anspruch 13 oder 14 mit den folgenden Schritten:
a) Absenken der Fahrzeugkontakteinheit (64) in eine Kontaktierungsrichtung (R_{K}) zur Bodenkontakteinheit (12) hin bis zur Berührung der Fahrzeugkontakteinheit (64) und der Bodenkontakteinheit (12),
b) Überprüfen, ob wenigstens eine bestimmte Kontaktelektrode (84, 88, 92) der Fahrzeugkontakteinheit (64) wenigstens einen entsprechenden bestimmten Kontaktbereich (20, 24, 28) der Bodenkontakteinheit (12) kontaktiert, und
c) Verdrehen der Fahrzeugkontakteinheit (64) um eine Drehachse (D), falls kein oder kein ausreichender elektrischer Kontakt zwischen der wenigstens einen bestimmten Kontaktelektrode (84, 88, 92) und dem wenigstens einen entsprechenden bestimmten Kontaktbereich (20, 24, 28) besteht,
insbesondere wobei während dem Verdrehen oder nach abgeschlossener Drehung überprüft wird, ob die wenigstens eine bestimmte Kontaktelektrode (84, 88, 92) den wenigstens einen entsprechenden Kontaktbereich (20, 24, 28) kontaktiert.

## Claims

1. Vehicle connection device for a vehicle battery charging system for automatically conductively connecting a vehicle contact unit (64) to a ground contact unit (12), comprising
the vehicle contact unit (64) that has a base (78) with a contacting area (80) in which at least one first contact electrode (84), at least one second contact electrode (88) and at least one third contact electrode (92) are provided, wherein the vehicle contact unit (64) is moveable towards the ground contact unit (12) in a contacting direction (R_{K}) in order to bring the at least one first contact electrode (84), the at least one second contact electrode (88) and the at least one third contact electrode (92) in contact with the ground contact unit (12),
**characterized by** an aligning actuator (60) that is connected to the base (78) in such a way that it can rotate the base (78) about an axis of rotation (D) that extends essentially in the contacting direction (R_{K}).

2. Vehicle connection device according to claim 1, **characterized in that** the at least one first contact electrode (84) is at least one earthing contact electrode (86), the at least one second contact electrode (88) is at least one neutral electrode (90) or at least one positive direct-current electrode, and/or the at least one third contact electrode (92) is at least one phase electrode (94) or at least one negative direct-current electrode.

3. Vehicle connection device according to any of the preceding claims, **characterized in that** the at least one first contact electrode (84), the at least one second contact electrode (88) and the at least one third contact electrode (92) are arranged together on the contact side of the base (78) on the lattice points of a base lattice (Gs) in the form of a two-dimensional Bravais lattice.

4. Vehicle connection device according to any of the preceding claims, **characterized in that** a magnetic area (102) is provided in the contacting area (80), in particular at the center point of the contacting area (80), a contact magnet (104) being arranged in or on the base (78) in the magnetic area (102), the contact magnet (104) determining the position of the axis of rotation (D),
in particular wherein one of the at least one first contact electrode (84), of the at least one second contact electrode (88) and of the at least one third contact electrode (92), in particular one first contact electrode (84), is arranged in the magnetic area (102) and **in that** the contact magnet (104) is assigned to the contact electrode (84, 88, 92) arranged in the magnetic area (102).

5. Vehicle connection device according to claim 4, **characterized in that** the magnetic area (102) is located on a lattice point of the base lattice (Gs), wherein contact electrodes (84, 88, 92) are provided on the closest adjacent lattice points,
in particular wherein contact electrodes (84, 88, 92), in particular first contact electrodes (84), are provided on the second closest lattice points adjacent to the magnetic area (102).

6. Vehicle connection device according to any of the preceding claims, **characterized in that** at least three second contact electrodes (88) and/or at least three third contact electrodes (92) are provided for transmitting three-phase electric power, wherein at least one of the at least three second and/or third contact electrodes (88, 92) is an L1 phase electrode (132), at least one other of the at least three second and/or third contact electrodes (88, 92) is an L2 phase electrode (134), and at least one further one of the at least three second and/or third contact electrodes (88, 92) is an L3 phase electrode (136).

7. Vehicle connection device according to any of the preceding claims, **characterized in that** the aligning actuator (60) comprises an electric motor (66) having an output shaft that is connected to the vehicle contact unit (64) for torque transmission.

8. Ground contact unit for a vehicle battery charging system for automatically, conductively connecting the ground contact unit (12) and a vehicle contact unit (64), comprising a plate-shaped base body (16) as well as first contact areas (20), second contact areas (24) and third contact areas (28), the contact areas (20, 24, 28) being different from each other and being arranged on a target surface (18) of the base body (16) in a main lattice (G_{H}) in the form of a two-dimensional Bravais lattice,
wherein the first contact areas (20) are arranged in a first sublattice (G_{U1}) in the form of a two-dimensional Bravais lattice, the second contact areas (24) are arranged in a second sublattice (G_{U2}) in the form of a two-dimensional Bravais lattice, and the third contact areas (28) are arranged in a third sublattice (G_{U3}) in the form of a two-dimensional Bravais lattice,
wherein the first sublattice (G_{U1}), the second sublattice (G_{U2}) and the third sublattice (Gus) are interlaced with each other,
wherein the first contact areas (20), the second contact areas (24) and the third contact areas (28) occur alternately in the direction of at least one of the basis vectors (h₁, h₂) of the main lattice (G_{H}).

9. Ground contact unit according to claim 8, **characterized in that** the ground contact unit (12) includes a ground control unit (38) as well as a first ground connection (40.1), a second ground connection (40.2) and a third ground connection (40.3) for connecting the ground contact unit (12) on the ground side,
wherein the first contact areas (20) are electrically connected to the first ground connection (40.1),
and wherein the ground control unit (38) is configured to switch the electrical connection of the second contact areas (24) between at least two of the first ground connection (40.1), the second ground connection (40.2) and an earthing and/or to switch the electrical connection of the third contact areas (28) between at least two of the first ground connection (40.1), the third ground connection (40.3) and an earthing.

10. Ground contact unit according to claim 8 or 9, **characterized in that** the first contact areas (20) are earthing contact areas (22), the second contact areas (24) are neutral contact areas (26) or positive direct-current contact areas, and/or the third contact areas (28) are phase contact areas (30) or negative direct-current contact areas, and/or
**in that** at least two of the three sublattices (G_{U1}, G_{U2}, G_{U3}) are identical lattices and/or at least two of the main lattice (G_{H}) and the three sublattices (G_{U1}, G_{U2}, G_{U3}) are of the same type, in particular **in that** the main lattice (G_{H}), the first sublattice (G_{U1}), the second sublattice (G_{U2}) and/or the third sublattice (G_{U3}) are hexagonal lattices.

11. Ground contact unit according to any of claims 8 to 10, **characterized in that** at least three second contact areas (26) and/or at least three third contact areas (28) are provided for transmitting three-phase electric power, wherein at least one of the at least three second and/or third contact areas (26, 28) is an L1 contact area (126), at least one other of the at least three second and/or third contact areas (26, 28) is an L2 contact area (128), and at least one further of the at least three second and/or third contact areas (26, 28) is an L3 contact area (130),
wherein the at least one L1 contact area (126), the at least one L2 contact area (128) and the at least one L3 contact area (130) occur alternately in the direction of at least one of the basis vectors (u_{3,1}, u_{3,2}) of the third sublattice (G_{U3}).

12. Ground contact unit according to any of claims 8 to 11, **characterized in that** magnetic, in particular ferromagnetic elements (46) are provided in or on the base body (16) in the first contact areas (20), the second contact areas (24) and/or the third contact areas (28),
in particular wherein the magnetic elements (46) each encompass an electrical lead (44) that electrically contacts the corresponding contact area (20, 24, 28).

13. Automatic vehicle coupling system comprising a vehicle connection device (14) according to any of claims 1 to 7 and a ground contact unit (12) according to any of claims 8 to 12,
wherein the base lattice (Gs) and the main lattice (G_{H}) substantially correspond to each other and/or the aligning actuator (60) is connected to the base (78) in such a way that it can rotate the base (78) along the ground contact unit (12), in particular in the case of an existing contact between the contact electrodes (84, 88, 92) and the contact surfaces.

14. Automatic vehicle coupling system according to claim 13, **characterized in that** the vehicle connection device (14) is designed at least according to claim 4 and the ground contact unit (12) is designed at least according to claim 12, wherein the magnetic elements (46) of the vehicle contact unit (64) cooperate with the contact magnets (104) in order to fix the vehicle contact unit (64) in position on the ground contact unit (12) and to form the axis of rotation (D).

15. Method for automatically, conductively connecting a vehicle contact unit (64) to a ground contact unit (12) of an automatic vehicle coupling system (15) according to claim 13 or 14, comprising the following steps:
a) lowering the vehicle contact unit (64) towards the ground contact unit (12) in a contacting direction (R_{K}) until the vehicle contact unit (64) contacts the ground contact unit (12),
b) checking whether at least one specific contact electrode (84, 88, 92) of the vehicle contact unit (64) contacts at least one corresponding specific contact area (20, 24, 28) of the ground contact unit (12), and
c) rotating the vehicle contact unit (64) about an axis of rotation (D) if no or insufficient electrical contact exists between the at least one specific contact electrode (84, 88, 92) and the at least one corresponding specific contact area (20, 24, 28),
in particular wherein during the rotation or after the rotation has been completed, it is checked whether the at least one specific contact electrode (84, 88, 92) contacts the at least one corresponding contact area (20, 24, 28).

## Revendications

1. Dispositif de connexion de véhicule pour un système de chargement de batterie de véhicule pour la connexion automatique par conduction d'une unité de contact de véhicule (64) à une unité de contact au sol (12), comprenant
l'unité de contact de véhicule (64), qui présente une embase (78) avec une zone d'établissement de contact (80), dans laquelle sont prévues au moins une première électrode de contact (84), au moins une deuxième électrode de contact (88) et au moins une troisième électrode de contact (92), l'unité de contact de véhicule (64) étant apte à être déplacée dans un sens d'établissement de contact (R_{K}) vers l'unité de contact au sol (12) afin d'amener ladite au moins une première électrode de contact (84), ladite au moins une deuxième électrode de contact (88) et ladite au moins une troisième électrode de contact (92) en contact avec l'unité de contact au sol (12),
**caractérisé par** un actionneur d'alignement (60) relié à l'embase (78) de manière à pouvoir faire tourner l'embase (78) autour d'un axe de rotation (D) s'étendant sensiblement dans le sens d'établissement de contact (R_{K}).

2. Dispositif de connexion de véhicule selon la revendication 1, **caractérisé en ce que** ladite au moins une première électrode de contact (84) est au moins une électrode de contact de protection (86), ladite au moins une deuxième électrode de contact (88) est au moins une électrode neutre (90) ou au moins une électrode positive à courant continu et/ou ladite au moins une troisième électrode de contact (92) est au moins une électrode de phase (94) ou au moins une électrode négative à courant continu.

3. Dispositif de connexion de véhicule selon l'une des revendications précédentes, **caractérisé en ce que** ladite au moins une première électrode de contact (84), ladite au moins une deuxième électrode de contact (88) et ladite au moins une troisième électrode de contact (92) sont agencées ensemble du côté de contact de l'embase (78) sur les noeuds de réseau d'un réseau d'embase (Gs) sous forme de réseau de Bravais bidimensionnel.

4. Dispositif de connexion de véhicule selon l'une des revendications précédentes, **caractérisé en ce que** dans la zone d'établissement de contact (80), notamment au centre de la zone d'établissement de contact (80), il est prévu une zone magnétique (102) dans laquelle un aimant de contact (104) est agencé dans ou sur l'embase (78), l'aimant de contact (104) déterminant la position de l'axe de rotation (D),
l'une de ladite au moins une première électrode de contact (84), ladite au moins une deuxième électrode de contact (88) et ladite au moins une troisième électrode de contact (92), en particulier une première électrode de contact (84), étant notamment agencée dans la zone magnétique (102) et l'aimant de contact (104) étant associé à l'électrode de contact (84, 88, 92) agencée dans la zone magnétique (102).

5. Dispositif de connexion de véhicule selon la revendication 4, **caractérisé en ce que** la zone magnétique (102) est située sur un noeud de réseau du réseau d'embase (Gs), des électrodes de contact (84, 88, 92) étant prévues sur les noeuds de réseau directement adjacents,
des électrodes de contact (84, 88, 92), notamment des premières électrodes de contact (84), étant en particulier prévues sur les noeuds de réseau adjacents en deuxième position à la zone magnétique (102).

6. Dispositif de connexion de véhicule selon l'une des revendications précédentes, **caractérisé en ce que** pour la transmission de courant triphasé, il est prévu au moins trois deuxièmes électrodes de contact (88) et/ou au moins trois troisièmes électrodes de contact (92), au moins l'une desdites au moins trois deuxièmes et/ou troisièmes électrodes de contact (88, 92) étant une électrode de phase L1 (132), au moins une autre desdites au moins trois deuxièmes et/ou troisièmes électrodes de contact (88, 92) étant une électrode de phase L2 (134) et au moins une autre desdites au moins trois deuxièmes et/ou troisièmes électrodes de contact (88, 92) étant une électrode de phase L3 (136).

7. Dispositif de connexion de véhicule selon l'une des revendications précédentes, **caractérisé en ce que** l'actionneur d'alignement (60) comprend un moteur électrique (66) dont l'arbre de sortie est relié à l'unité de contact de véhicule (64) pour la transmission de couple.

8. Unité de contact au sol pour un système de chargement de batterie de véhicule pour la connexion automatique par conduction de l'unité de contact au sol (12) et d'une unité de contact de véhicule (64), comprenant un corps de base (16) en forme de plaque ainsi que des premières zones de contact (20), des deuxièmes zones de contact (24) et des troisièmes zones de contact (28), les zones de contact (20, 24, 28) étant différentes les unes des autres et étant agencées sur une surface cible (18) du corps de base (16) dans un réseau principal (G_{H}) sous forme de réseau de Bravais bidimensionnel,
les premières zones de contact (20) étant agencées dans un premier sous-réseau (G_{U1}) sous forme de réseau de Bravais bidimensionnel, les deuxièmes zones de contact (24) étant agencées dans un deuxième sous-réseau (G_{U2}) sous forme de réseau de Bravais bidimensionnel, et les troisièmes zones de contact (28) étant agencées dans un troisième sous-réseau (Gus) sous forme de réseau de Bravais bidimensionnel,
le premier sous-réseau (G_{U1}), le deuxième sous-réseau (G_{U2}) et le troisième sous-réseau (Gus) étant imbriquées les uns dans les autres,
les premières zones de contact (20), les deuxièmes zones de contact (24) et les troisièmes zones de contact (28) apparaissant en alternance dans le sens d'au moins l'un des vecteurs de base (h₁, h₂) du réseau principal (G_{H}).

9. Unité de contact au sol selon la revendication 8, **caractérisée en ce que** l'unité de contact au sol (12) présente une unité de commande au sol (38) ainsi qu'un premier raccord au sol (40.1), un deuxième raccord au sol (40.2) et un troisième raccord au sol (40.3) pour le raccordement côté sol de l'unité de contact au sol (12),
les premières zones de contact (20) étant connectées électriquement au premier raccordement au sol (40.1),
et l'unité de commande au sol (38) étant réalisée de manière à commuter les deuxièmes zones de contact (24) entre au moins deux du premier raccord au sol (40.1), du deuxième raccord au sol (40.2) et une mise à la terre pour la connexion électrique et/ou pour commuter les troisièmes zones de contact (28) entre au moins deux du premier raccord au sol (40.1), du troisième raccord au sol (40.3) et une mise à la terre pour la connexion électrique.

10. Unité de contact au sol selon la revendication 8 ou 9, **caractérisée en ce que** les premières zones de contact (20) sont des zones de contact de protection (22), les deuxièmes zones de contact (24) sont des zones de contact neutres (26) ou des zones de contact positives à courant continu et/ou les troisièmes zones de contact (28) sont des zones de contact de phase (30) ou des zones de contact négatives à courant continu, et/ou
**en ce qu'**au moins deux des trois sous-réseaux (G_{U1}, G_{U2}, G_{U3}) sont des réseaux identiques et/ou au moins deux du réseau principal (G_{H}) et des trois sous-réseaux (G_{U1}, G_{U2}, G_{U3}) sont du même type, en particulier **en ce que** le réseau principal (G_{H}), le premier sous-réseau (G_{U1}), le deuxième sous-réseau (G_{U2}) et/ou le troisième sous-réseau (Gus) sont des réseaux hexagonaux.

11. Unité de contact au sol selon l'une des revendications 8 à 10, **caractérisée** en ce pour la transmission de courant triphasé, il est prévu au moins trois deuxièmes zones de contact (26) et/ou au moins trois troisièmes zones de contact (28), au moins l'une desdites au moins trois deuxièmes et/ou troisièmes zones de contact (26, 28) étant une zone de contact L1 (126), au moins une autre desdites au moins trois deuxièmes et/ou troisièmes zones de contact (26, 28) étant une zone de contact L2 (128) et au moins une autre desdites au moins trois deuxièmes et/ou troisièmes zones de contact (26, 28) étant une zone de contact L3 (130),
ladite au moins une zone de contact L1 (126), ladite au moins une zone de contact L2 (128) et ladite au moins une zone de contact L3 (130) apparaissant en alternance dans le sens d'au moins un des vecteurs de base (u_{3,1}, u_{3,2}) du troisième sous-réseau (G_{U3}).

12. Unité de contact au sol selon l'une des revendications 8 à 11, **caractérisée en ce que** des éléments magnétiques, notamment ferromagnétiques (46), sont prévus dans ou sur le corps de base (16) dans les premières zones de contact (20), les deuxièmes zones de contact (24) et/ou les troisièmes zones de contact (28),
les éléments magnétiques (46) entourant en particulier chacun une ligne électrique (44) qui établit un contact électrique avec la zone de contact (20, 24, 28) correspondante.

13. Système de couplage automatique de véhicule comprenant un dispositif de connexion de véhicule (14) selon l'une des revendications 1 à 7 et une unité de contact au sol (12) selon l'une des revendications 8 à 12,
le réseau d'embase (GS) et le réseau principal (GH) se correspondant sensiblement et/ou l'actionneur d'alignement (60) étant relié à l'embase (78) de manière à pouvoir faire tourner l'embase (78) le long de l'unité de contact au sol (12), notamment lorsqu'il y a un contact entre les électrodes de contact (84, 88, 92) et les surfaces de contact.

14. Système de couplage automatique de véhicule selon la revendication 13, **caractérisé en ce que** le dispositif de connexion de véhicule (14) est réalisé au moins selon la revendication 4 et l'unité de contact au sol (12) est réalisée au moins selon la revendication 12, les éléments magnétiques (46) de l'unité de contact de véhicule (64) coopérant avec l'aimant de contact (104) pour fixer l'unité de contact de véhicule (64) à l'unité de contact au sol (12) et former l'axe de rotation (D).

15. Procédé de connexion automatique par conduction d'une unité de contact de véhicule (64) à une unité de contact au sol (12) d'un système de couplage automatique de véhicule (15) selon la revendication 13 ou 14, comprenant les étapes suivantes :
a) abaissement de l'unité de contact de véhicule (64) dans un sens d'établissement de contact (R_{K}) vers l'unité de contact au sol (12) jusqu'à ce que l'unité de contact de véhicule (64) et l'unité de contact au sol (12) se touchent,
b) vérification si au moins une électrode de contact déterminée (84, 88, 92) de l'unité de contact de véhicule (64) est en contact avec au moins une zone de contact déterminée correspondante (20, 24, 28) de l'unité de contact au sol (12), et
c) rotation de l'unité de contact de véhicule (64) autour d'un axe de rotation (D) s'il n'y a pas de contact électrique ou pas de contact électrique suffisant entre ladite au moins une électrode de contact déterminée (84, 88, 92) et ladite au moins une zone de contact déterminée correspondante (20, 24, 28),
une vérification étant en particulier effectuée pendant la rotation ou après la fin de la rotation, si ladite au moins une électrode de contact déterminée (84, 88, 92) est en contact avec ladite au moins une zone de contact correspondante (20, 24, 28).
